# FASCICULE DE BREVET EUROPEEN

(11) **EP 3 811 679 B1**
(45) Date de publication et mention de la délivrance du brevet: **30.07.2025**
(21) Numéro de dépôt: 19744763.4
(22) Date de dépôt: 14.06.2019
(51) Int. Cl.: H04L 47/26, H04W 8/04, H04W 76/18, H04W 48/06, H04W 28/02

(54) **PROCÉDÉ ET DISPOSITIF DE GESTION D'UN ÉTAT DE SURCHARGE D'UN COEUR DE RÉSEAU CONTRÔLANT UN RÉSEAU D'ACCÈS MOBILE**
VERFAHREN UND VORRICHTUNG ZUR VERWALTUNG EINER ÜBERLASTUNG EINES EIN MOBILFUNKNETZ STEUERNDEN NETZWERKKERNS
METHOD AND DEVICE FOR MANAGING AN OVERLOAD OF A NETWORK CORE CONTROLLING A MOBILE ACCESS NETWORK

(30) Priorité: 20.06.2018 FR 1855460
(43) Date de publication de la demande: 28.04.2021
(73) Titulaire: Orange, 92130 Issy-les-Moulineaux (FR)
(72) Inventeur: MOUQUET, Antoine, 92326 CHÂTILLON CEDEX (FR); ZANDER, Sabine, 92326 CHÂTILLON CEDEX (FR); TOSSOU, Bruno, 92326 CHÂTILLON CEDEX (FR)
(74) Mandataire: Cabinet Beau de Loménie
(86) Numéro de dépôt international: PCT/FR2019/051439
(87) Numéro de publication internationale: WO 2019/243717

(56) Documents cités:
- US-A1- 2016 029 246
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.2.0, 19 June 2018 (2018-06-19), pages 1 - 217, XP051472860
- CISCO: "MTC Congestion Control", 8 August 2016 (2016-08-08), pages 1 - 20, XP055515594, Retrieved from the Internet <URL:https://www.cisco.com/c/en/us/td/docs/wireless/asr_5000/20/SGSN/b_20_SGSN_Admin/b_20_SGSN_Admin_chapter_010101.pdf> [retrieved on 20181016]
- ERICSSON: "Clarifications for Overload Start triggered UE rejections", vol. RAN WG3, no. Tenerife, Spain; 20150420 - 20150424, 11 April 2015 (2015-04-11), XP050937400, Retrieved from the Internet <URL:http://www.3gpp.org/ftp/Meetings_3GPP_SYNC/RAN3/Docs/> [retrieved on 20150411]

## Description

### Arrière-plan de l'invention

L'invention se rapporte au domaine général des télécommunications et concerne plus particulièrement la gestion d'un état de surcharge d'un cœur de réseau contrôlant un réseau d'accès mobile, comme par exemple dans le contexte d'un réseau mobile de quatrième génération (4G) ou de cinquième génération (5G).

Dans les réseaux mobiles 4G et 5G, des mécanismes sont prévus pour répondre aux situations de surcharge susceptibles d'affecter les cœurs de réseau de ces réseaux mobiles. On notera à cet égard que des procédés connus en soi permettent d'équilibrer la charge entre plusieurs nœuds du cœur de réseau analogues desservant un même point d'accès, comme ceux décrits dans les spécifications 3GPP TS 23.401 v15.3.0 (au paragraphe 4.3.7.2) et TS 36.401 (au paragraphe 7.2.10) pour la 4G ; une fois un tel procédé mis en œuvre, on peut supposer que la surcharge d'un nœud du cœur de réseau est indicatrice d'une surcharge générale du cœur de réseau, au moins pour la génération technologique et la zone géographique concernée. En tout état de cause, dans le présent document, on désigne par « surcharge du cœur de réseau » indifféremment la surcharge d'un nœud particulier du cœur de réseau ou la surcharge générale du cœur de réseau.

Ces mécanismes pour répondre aux situations de surcharge opèrent notamment au niveau de la « strate de non-accès » (ou NAS pour « Non-Access Stratum » en anglais). Cette strate de non-accès désigne de façon connue, dans un système de télécommunications mobile, une couche fonctionnelle entre le cœur de réseau et un terminal connecté au réseau d'accès. Elle gère l'établissement des sessions de communications entre le terminal et le réseau mobile et sert à maintenir la continuité de la communication avec le terminal au cours de ses déplacements. Cette couche NAS s'oppose à la strate d'accès ou couche AS pour Access Stratum, qui est en charge du transport des informations sur la portion radio (i.e. sans fil) du réseau mobile (autrement dit au niveau du réseau d'accès mobile) et de gérer les ressources radio du réseau d'accès.

Ces mécanismes sont décrits par exemple dans le document de spécification TS 23.060 9 5.3.6.2, v15.2.0 (mars 2018) pour les réseaux mobiles 2G et 3G, dans le document de spécification 3GPP TS 23.401 v15.3.0 (au paragraphe 4.3.7.4.2) pour les réseaux mobiles 4G, et dans le document de spécification 3GPP TS 23.501 v15.1.0 (au paragraphe 5.19) pour les réseaux mobiles 5G. Ils sont destinés à être mis en œuvre par des nœuds situés à l'entrée du cœur de réseau : un tel nœud est typiquement une passerelle SGSN (Serving GPRS Support Node) pour les réseaux mobiles 2G et 3G, un équipement MME (Mobility Management Entity) de gestion de la mobilité pour un réseau mobile 4G, ou un équipement AMF (Access and Mobility Function) de gestion de l'accès et de la mobilité associé à un équipement SMF (Session Management Function) de gestion de sessions pour un réseau mobile 5G.

Plus spécifiquement, ce nœud du cœur de réseau peut, lorsqu'il détermine que le cœur de réseau se trouve dans une situation de surcharge et reçoit une requête NAS d'un terminal d'un utilisateur souhaitant par exemple établir une session de communication pour communiquer sur le réseau mobile, s'abstenir de traiter la requête NAS du terminal, et lui associer une durée de contention (ou « backoff timer » en anglais). Cette durée de contention est destinée à retarder l'envoi par le terminal de nouvelles requêtes NAS au cœur de réseau afin de ne pas surcharger davantage celui-ci. Le nœud communique au terminal la durée de contention qu'il lui a allouée en réponse à la requête NAS du terminal. Lorsque le terminal reçoit la réponse à sa requête NAS contenant une telle durée de contention, il est censé ne pas renvoyer de nouvelle requête NAS à destination du cœur de réseau tant que cette durée de contention n'a pas expiré ou tant qu'il ne reçoit pas de requête de recherche (« paging » en anglais) de la part du réseau.

En pratique, certains terminaux n'appliquent pas correctement ce mode de fonctionnement : ils ne respectent pas la durée de contention qui leur est allouée et réémettent leurs requêtes NAS avant l'expiration de la durée de contention. Quand bien même le nœud situé en entrée du cœur de réseau va rejeter toutes ces requêtes NAS et ne pas les transmettre au cœur de réseau pour traitement, un tel comportement des terminaux produit des flux de signalisation supplémentaires qui doivent être gérés au niveau du réseau d'accès et au niveau du cœur de réseau, notamment par le nœud situé à l'entrée de celui-ci. Ceci a un impact négatif à la fois sur le niveau de surcharge de ce nœud ainsi que sur la durée pendant laquelle ce nœud reste dans un tel état de surcharge : en cas de surcharge importante du cœur de réseau, un tel comportement est particulièrement inapproprié et s'oppose à un rétablissement rapide de la situation de surcharge du cœur de réseau.

Il convient de noter qu'avec l'arrivée sur le marché de populations importantes d'objets connectés fournis par une pluralité de fabricants distincts et destinés à utiliser notamment les réseaux mobiles 4G et 5G, on peut s'attendre à une augmentation de ce type de comportements inappropriés.

### Objet et résumé de l'invention

L'invention concerne un procédé de gestion d'un état de surcharge d'un cœur de réseau contrôlant un réseau d'accès mobile, ce procédé de gestion étant destiné à être mis en œuvre par un dispositif situé à l'entrée du cœur de réseau (également désigné dans ce document par dispositif d'entrée du cœur de réseau), ce procédé de gestion comprenant, pour au moins un terminal connecté au réseau d'accès mobile via un point d'accès et géré par le dispositif, suite à une réception d'une requête de strate de non-accès, dite requête NAS, en provenance du terminal :
- une étape de détection si une durée de contention est associée à ce terminal ;
- **si aucune** durée de contention n'est associée au terminal, une étape d'association et de transmission audit terminal d'une durée de contention destinée à être appliquée par celui-ci pour l'envoi de requêtes NAS au cœur de réseau.
Le procédé de gestion est remarquable en ce qu'il comprend en outre, si lors de l'étape de détection, il est détecté qu'une durée de contention est associée au terminal et n'a pas été respectée par celui-ci, une étape d'envoi au terminal par le dispositif situé à l'entrée du cœur de réseau, via le point d'accès, d'un identifiant temporaire alloué au terminal pour communiquer avec le cœur de réseau, et une étape d'envoi au point d'accès, par le dispositif situé à l'entrée du cœur de réseau, d'un message de commande comprenant au moins une partie dudit identifiant temporaire, ce message de commande requérant un blocage par le point d'accès de tout ou partie des requêtes émises par un terminal qui contiennent ladite au moins une partie de l'identifiant temporaire.

Corrélativement, l'invention vise aussi un dispositif situé à l'entrée d'un cœur de réseau contrôlant un réseau d'accès mobile, apte à gérer un état de surcharge du cœur de réseau et comprenant :
- un module de réception, apte à recevoir une requête de strate de non-accès (requête NAS) en provenance d'au moins un terminal connecté au réseau d'accès mobile via un point d'accès et géré par le dispositif ;
- des modules, activés pour au moins un dit terminal par le module de réception suite à la réception d'une requête NAS de ce terminal, ces modules comprenant :
   ∘ un module de détection configuré pour détecter si une durée de contention est associée audit terminal ; et
   ∘ un module d'association, activé si aucune durée de contention n'est associée au terminal, et configuré pour associer et transmettre audit terminal une durée de contention destinée à être appliquée par celui-ci pour l'envoi de requêtes NAS au cœur de réseau.
Ce dispositif est remarquable en ce qu'il comprend en outre un module d'envoi activé si le module de détection détecte qu'une durée de contention est associée au terminal et n'a pas été respectée par celui-ci, ce module d'envoi étant configuré pour envoyer au terminal, via le point d'accès, un identifiant temporaire alloué au terminal pour communiquer avec le cœur de réseau, et pour envoyer au point d'accès un message de commande comprenant au moins une partie dudit identifiant temporaire, ce message de commande requérant un blocage par le point d'accès de tout ou partie des requêtes émises par un terminal qui contiennent ladite au moins une partie de l'identifiant temporaire.

L'invention propose donc un procédé permettant de gérer efficacement un état de surcharge du cœur de réseau d'un réseau mobile et tenant compte du comportement inapproprié de certains terminaux qui ne respectent pas les durées de contention qui leur sont allouées par le dispositif situé à l'entrée du cœur de réseau dans une telle situation de surcharge. Ce procédé s'appuie sur le filtrage des requêtes émises par ces terminaux au niveau du réseau d'accès mobile, c'est-à-dire avant qu'elles n'atteignent le cœur de réseau afin de ne pas aggraver son état de surcharge.

Pour permettre ce filtrage, le procédé de gestion selon l'invention prévoit avantageusement l'attribution d'identifiants temporaires dédiés pour communiquer avec le réseau aux terminaux dont les requêtes doivent être filtrées par le réseau d'accès, et la transmission à tout ou partie des points d'accès du réseau d'accès de ces identifiants, ou tout du moins d'une partie représentative de ces identifiants susceptible d'être utilisée par les terminaux lors de leurs communications via ces points d'accès (autrement dit d'une partie permettant aux points d'accès d'identifier les requêtes provenant des terminaux concernés). De cette sorte, les points d'accès peuvent aisément discriminer les terminaux qui ne respectent pas leurs durées de contention et leur empêcher toute connexion au réseau lorsque ce blocage est demandé par le dispositif situé à l'entrée du cœur de réseau (notamment en cas de surcharge). En conséquence, les requêtes émises par ces terminaux « illicites », et *a fortiori* les requêtes NAS émises par ces terminaux illicites, ne sont pas transmises au cœur de réseau pendant ces périodes de blocage sélectif.

On notera que, de manière classique, les terminaux se voient allouer un identifiant temporaire (identifiant GUTI (Globally Unique Temporary Identifier) pour les réseaux 4G et 5G) dès lors qu'ils sont enregistrés sur le réseau, le réseau pouvant d'ailleurs décider à tout moment de changer l'identifiant temporaire d'un terminal. L'usage classique d'identifiants temporaires au lieu de l'identifiant permanent (IMSI) sert à préserver l'anonymat de l'utilisateur (i.e. empêcher la traque illicite d'un utilisateur). L'invention propose de remplacer, dans un mode particulier de réalisation, cet identifiant temporaire classique par un identifiant temporaire dédié à la mise en œuvre de l'invention, dont une partie au moins est mentionnée dans ledit message de commande aux points d'accès pour permettre à ceux-ci de discriminer les requêtes qu'ils doivent filtrer.

En filtrant au niveau du réseau d'accès mobile les requêtes « illicites » émises par les terminaux, l'invention permet d'améliorer la résilience du réseau mobile et de contribuer à un retour à un état de charge normal de son cœur de réseau. Le fait que ce soit un dispositif situé en entrée du cœur de réseau qui gère l'attribution des identifiants temporaires et soit à l'initiative du blocage au niveau des points d'accès du réseau d'accès mobile des requêtes illicites issues de ces terminaux permet d'intervenir en amont du cœur de réseau et d'éviter de surcharger davantage celui-ci. Un tel dispositif d'entrée du cœur de réseau configuré pour mettre en œuvre le procédé de gestion selon l'invention est par exemple :
- un équipement SGSN (Serving GPRS Support Node) lorsque le réseau d'accès mobile est un réseau de deuxième ou troisième génération ; ou
- un équipement MME (Mobility Management Entity) de gestion de la mobilité lorsque le réseau d'accès mobile est un réseau de quatrième génération ; ou
- un équipement AMF (Access and Mobility management Function) de gestion de la mobilité et de l'accès éventuellement associé à un équipement SMF (Session Management Function) de gestion de session lorsque le réseau d'accès mobile est un réseau de cinquième génération.

On note que conformément à l'invention, le (ou les) point(s) d'accès du réseau d'accès mobile est (sont) configuré(s) via le message de commande envoyé par le dispositif d'entrée du cœur de réseau pour bloquer soit toutes les requêtes provenant d'un terminal donné, soit seulement une partie des requêtes émises par ce terminal. Par exemple, le message de commande peut requérir un blocage par le point d'accès de toutes les requêtes émises par un terminal qui contiennent ladite au moins une partie de l'identifiant temporaire alloué à ce terminal, à l'exception des requêtes relatives à un service d'urgence. L'invention offre ainsi la possibilité de moduler le filtrage opéré par le point d'accès pour tenir compte de situations exceptionnelles comme par exemple d'une situation d'urgence.

De façon similaire, on peut envisager dans un mode particulier de réalisation, que le dispositif d'entrée du cœur de réseau exclut l'application du procédé de gestion selon l'invention à certaines catégories de terminaux (par exemple en fonction de l'abonnement auquel les utilisateurs des terminaux ont souscrit auprès du réseau mobile ou d'une priorité associée à certains terminaux).

Dans un mode particulier de réalisation, le procédé de gestion comprend en outre, si lors de l'étape de détection, il est détecté qu'une durée de contention est associée au terminal et n'a pas été respectée par ce terminal, une étape d'incrémentation d'un compteur global de requêtes NAS dites illicites associé à un ensemble comprenant une pluralité de terminaux dits illicites gérés par le dispositif situé à l'entrée du cœur de réseau et ne respectant pas les durées de contention qui leur ont été allouées, l'étape d'envoi au point d'accès du message de commande étant déclenchée lorsque le dispositif situé à l'entrée du cœur de réseau détecte que le compteur global est supérieur à un seuil prédéterminé.

Autrement dit, l'événement déclencheur de l'envoi du message de commande au point d'accès et du filtrage par ce dernier des requêtes émises par les terminaux de l'ensemble illicite est le franchissement par un compteur de requêtes illicites maintenu par le dispositif d'entrée du cœur de réseau d'un seuil prédéterminé. Ce seuil peut typiquement être fixé de sorte à éviter que l'état de surcharge du réseau n'atteigne un niveau de gravité trop important, en tenant compte notamment du dimensionnement initial du cœur de réseau et/ou de l'impact des requêtes NAS illicites sur l'état du cœur de réseau. Ce mode de réalisation offre la possibilité de moduler le blocage des requêtes illicites des terminaux en fonction d'un critère objectif tenant compte de l'existence ou non d'une situation critique à l'égard de ces requêtes illicites par rapport à l'état du cœur de réseau.

Dans une variante de réalisation, on peut envisager que l'étape d'envoi au point d'accès du message de commande soit déclenchée lorsque le dispositif situé à l'entrée du cœur de réseau détecte un niveau de charge du cœur de réseau supérieur à un seuil prédéterminé.

Ce mode de réalisation permet de mettre en place une politique de gestion de la congestion du cœur de réseau sans attendre que celui-ci ait atteint un seuil trop critique.

Dans un mode particulier de réalisation, le message de commande comprend au moins une partie de chaque identifiant temporaire alloué pour communiquer avec le cœur de réseau à chaque terminal de l'ensemble des terminaux illicites, le message de commande requérant le blocage par le point d'accès de tout ou partie des requêtes qui contiennent lesdites parties des identifiants temporaires alloués aux terminaux de l'ensemble de terminaux illicites.

Ce mode de réalisation permet de limiter la signalisation échangée entre le dispositif situé à l'entrée du cœur de réseau et les points d'accès du réseau d'accès mobile pour activer le blocage des requêtes illicites envoyées par les terminaux. Il s'ensuit un impact limité de la signalisation échangée pour mettre en œuvre l'invention sur l'état de surcharge du cœur de réseau.

Dans un mode particulier de réalisation, le procédé de gestion comprend en outre, si lors de l'étape de détection, il est détecté qu'une durée de contention est associée au terminal et n'est pas respectée par ce terminal, une étape d'incrémentation d'un compteur de requêtes NAS illicites spécifique au terminal, l'identifiant temporaire étant alloué au terminal par le dispositif situé à l'entrée du cœur de réseau lorsque ledit dispositif détecte un dépassement par le compteur spécifique au terminal d'un seuil prédéterminé.

Ce mode de réalisation permet de ne déclencher l'allocation d'un identifiant temporaire par le dispositif d'entrée du cœur de réseau à un terminal que lorsque celui-ci a un comportement considéré comme dommageable pour la surcharge du cœur de réseau, en configurant de manière appropriée la valeur du seuil déclenchant cette allocation. On peut de cette sorte réduire la charge de travail nécessaire pour allouer de nouveaux identifiants temporaires par ce dernier à des terminaux qui n'envoient que peu de requêtes illicites à destination du cœur de réseau, et éviter de bloquer l'accès à des terminaux, qui bien qu'ayant effectué quelques requêtes illicites, n'engendrent pas un dommage significatif sur la charge du réseau.

Dans un mode particulier de réalisation de l'invention, l'identifiant temporaire alloué au terminal est un identifiant temporaire global unique ou GUTI tel que défini dans la spécification 3GPP TS 23.003, v15.3.0.

On note que par « tel que défini dans la spécification 3GPP TS 23.0003 v15.3.0 » on entend ici que l'identifiant temporaire global unique est défini de façon identique à ce qui est décrit dans la spécification 3GPP TS 23.003, v15.3.0. Cela n'empêche pas toutefois que des définitions identiques soient données dans des versions antérieures du document de spécification TS 23.003 (pouvant se rapporter à la même « *release* » ou à des « *releases* » antérieures) et que l'identifiant temporaire global unique alloué dans le cadre de l'invention soit ainsi également conforme à la définition donnée dans ces versions antérieures.

Ce mode de réalisation présente un avantage particulier car il propose d'utiliser comme identifiant temporaire pour mettre en œuvre l'invention, un identifiant GUTI tel que celui qui est alloué aujourd'hui aux terminaux sur les réseaux mobiles 4G et 5G lors de leur attachement à ces réseaux. Comme mentionné précédemment, cet identifiant GUTI permet, de façon connue en soi, de fournir une identité unique à un terminal pour communiquer sur le réseau mobile (et notamment avec le cœur de réseau) sans dévoiler l'identification confidentielle et unique qui est stockée dans sa carte SIM (aussi connue sous le nom de IMSI pour International Mobile Subscriber Identity). Il est alloué typiquement aux terminaux lors de leur attachement au réseau mobile par le dispositif situé en entrée du cœur de réseau responsable de la gestion de la mobilité des terminaux dans le réseau mobile, et notamment par le dispositif MME pour les réseaux 4G et par le dispositif AMF pour les réseaux 5G. L'invention permet donc dans ce mode de réalisation de s'appuyer sur des procédures d'allocation et de transmission d'identifiants temporaires déjà prévues et implémentées dans les réseaux mobiles normalisés, et donc de simplifier la mise en œuvre de l'invention. En particulier, ce mode de réalisation permet une mise en œuvre de l'invention totalement transparente pour les terminaux.

De façon similaire, dans un mode particulier de réalisation, le message de commande est un message OVERLOAD START tel que défini dans la spécification 3GPP TS 23.401 v15.3.0 ou à la spécification 3GPP TS 23.501 v15.1.0, modifié conformément à l'invention pour requérir un blocage par le point d'accès de tout ou partie des requêtes émises par un terminal qui contiennent ladite au moins une partie dudit identifiant temporaire.

Comme mentionné précédemment pour le GUTI, des versions antérieures des spécifications précitées peuvent être considérées également dès lors qu'elles définissent un message OVERLOAD START tel que celui décrit dans la spécification 3GPP TS 23.401 v15.3.0 ou à la spécification 3GPP TS 23.501 v15.1.0.

L'invention peut ainsi être mise en œuvre de façon simplifiée en s'appuyant sur la signalisation existante des réseaux mobiles 4G et 5G normalisés. On note toutefois que conformément à l'invention, le message de commande contient des informations qui ne sont pas prévues aujourd'hui dans le message OVERLOAD START défini par les spécifications précitées, à savoir tout ou partie des identifiants temporaires alloués aux terminaux dont le point d'accès doit filtrer les requêtes, ainsi que le cas échéant, une caractérisation des requêtes en provenance de ces terminaux qu'il convient ou non de filtrer. Il convient donc, dans ce mode de réalisation, de prévoir l'adaptation du message OVERLOAD START décrit dans les spécifications 3GPP TS 23.401 et TS 23.501 en vue de pouvoir y insérer les informations précitées (par exemple via l'ajout d'un champ complémentaire, ou d'un paramètre complémentaire ou de valeurs complémentaires de paramètres ou de champs déjà existants, etc.).

Dans un mode particulier de réalisation, le procédé de gestion selon l'invention comprend en outre, sur détection par le dispositif situé à l'entrée du cœur de réseau d'une cessation de l'état de surcharge du cœur de réseau, une étape d'envoi au point d'accès d'un message de désactivation du blocage des requêtes.

Ce mode de réalisation permet, lorsque le cœur de réseau n'est plus en situation de surcharge, d'annuler le filtrage des requêtes réalisées par le point d'accès.

Dans un mode particulier de réalisation, le message de désactivation est un message OVERLOAD STOP conforme à la spécification 3GPP TS 23.401 v15.3.0 ou à la spécification 3GPP TS 23.501 v15.1.0.

Comme mentionné précédemment pour le GUTI, des versions antérieures des spécifications précitées peuvent être considérées également dès lors qu'elles définissent un message OVERLOAD STOP tel que celui décrit dans la spécification 3GPP TS 23.401 v15.3.0 ou à la spécification 3GPP TS 23.501 v15.1.0.

Dans un mode particulier de réalisation, le procédé de gestion comprend une étape d'allocation audit au moins un terminal d'un nouvel identifiant temporaire et une étape d'envoi de ce nouvel identifiant temporaire audit au moins un terminal pour communiquer avec le cœur de réseau.

Les étapes d'allocation et d'envoi peuvent faire suite par exemple à la détection par le dispositif situé à l'entrée du cœur de réseau d'une cessation de l'état de surcharge du cœur de réseau ou à la détection d'autres événements, comme par exemple la détection de la correction du mode de fonctionnement inapproprié du terminal en question par rapport à la durée de contention qui lui est allouée. Ce mode de réalisation permet d'extraire le terminal en question de l'ensemble des terminaux considérés comme illicites par le dispositif d'entrée du cœur de réseau et qui sont susceptibles d'être filtrés. Il permet également, sans avoir à agir auprès du point d'accès, de désactiver le filtrage des requêtes en provenance de ce terminal par le point d'accès (puisque le terminal n'utilisera plus dès lors l'identifiant temporaire qui a été communiqué au point d'accès), sans avoir à désactiver le filtrage des requêtes provenant des autres terminaux illicites.

Comme il apparaît au vu de ce qui vient d'être décrit, l'invention s'appuie sur la gestion de l'état de surcharge du cœur de réseau par le dispositif d'entrée du cœur de réseau, mais également sur la configuration par ce dispositif des points d'accès du réseau d'accès mobile avec au moins une partie des identifiants temporaires alloués aux terminaux responsables de l'envoi de requêtes NAS illicites à destination du cœur de réseau pour que les points d'accès filtrent les futures requêtes provenant de ces terminaux et ne les transmettent pas au cœur de réseau.

Ainsi, selon un autre aspect, l'invention vise également un procédé de traitement de requêtes, destiné à être mis en œuvre par un point d'accès d'un réseau d'accès mobile contrôlé par un cœur de réseau, ce procédé comprenant :
- une étape de réception, en provenance d'un dispositif situé à l'entrée du cœur de réseau, d'un message de commande comprenant au moins une partie d'au moins un identifiant temporaire alloué par ledit dispositif à au moins un terminal géré par ce dispositif pour communiquer avec le cœur de réseau et n'ayant pas respecté une durée de contention qui lui a été associée, ladite au moins une partie dudit au moins un identifiant temporaire étant utilisée par ledit au moins un terminal lors de ses communications avec ledit point d'accès et permettant au point **d'accès** d'identifier des requêtes provenant dudit terminal, ce message de commande requérant un blocage par le point d'accès de tout ou partie des requêtes émises par un terminal qui contiennent ladite au moins une partie dudit identifiant temporaire ;
- sur réception d'une requête reçue en provenance d'un terminal :
   ∘ une étape de vérification si la requête reçue comprend ladite au moins une partie dudit au moins un identifiant temporaire comprise dans le message de commande et doit être bloquée conformément au message de commande ;
   ∘ le cas échéant, une étape de blocage de ladite requête par le point d'accès ;
   ∘ sinon, une étape de transmission de ladite requête au dispositif situé à l'entrée du cœur de réseau.

Corrélativement, l'invention vise aussi un point d'accès d'un réseau d'accès mobile contrôlé par un cœur de réseau, ce point d'accès comprenant :
- un module de réception, apte à recevoir en provenance d'un dispositif situé à l'entrée du cœur de réseau, un message de commande comprenant au moins une partie d'au moins un identifiant temporaire alloué par ledit dispositif à au moins un terminal géré par ce dispositif pour communiquer avec le cœur de réseau et n'ayant pas respecté une durée de contention qui lui a été associée, ladite au moins une partie dudit au moins un identifiant temporaire étant utilisée par ledit au moins un terminal lors de ses communications avec ledit point d'accès et permettant au point d'accès d'identifier des requêtes provenant dudit terminal, ce message de commande requérant un blocage par le point d'accès de tout ou partie des requêtes émises par un terminal qui contiennent ladite au moins une partie dudit identifiant temporaire ;
- des modules, activés sur réception d'une requête reçue en provenance d'un terminal, et comprenant :
   ∘ un module de vérification, configuré pour vérifier si la requête reçue comprend ladite au moins une partie dudit au moins un identifiant temporaire comprise dans le message de commande et doit être bloquée conformément au message de commande ;
   ∘ un module de blocage, activé le cas échéant, pour bloquer la requête au niveau du point d'accès ; et
   ∘ un module de transmission, activé sinon, et configuré pour transmettre la requête au dispositif situé à l'entrée du cœur de réseau.

Selon un autre aspect encore, l'invention vise un système de communication comprenant :
- un dispositif selon l'invention situé à l'entrée d'un cœur de réseau contrôlant un réseau d'accès mobile ; et
- au moins un point d'accès du réseau d'accès mobile conforme à l'invention.

Le procédé de traitement, le point d'accès et le système de communication selon l'invention bénéficient des mêmes avantages cités précédemment que le dispositif d'entrée du cœur de réseau et le procédé de gestion selon l'invention.

Dans un mode particulier de réalisation, les différentes étapes du procédé de gestion et/ou les différentes étapes du procédé de traitement selon l'invention sont déterminées par des instructions de programmes d'ordinateurs.

En conséquence, l'invention vise aussi un programme d'ordinateur sur un support d'informations, ce programme étant susceptible d'être mis en œuvre dans un dispositif d'entrée du cœur de réseau contrôlant un réseau d'accès mobile ou plus généralement dans un ordinateur, ce programme comportant des instructions adaptées à la mise en œuvre des étapes d'un procédé de gestion tel que décrit ci-dessus.

L'invention vise également un programme d'ordinateur sur un support d'informations, ce programme étant susceptible d'être mis en œuvre dans un point d'accès à un réseau d'accès mobile ou plus généralement dans un ordinateur, ce programme comportant des instructions adaptées à la mise en œuvre des étapes d'un procédé de traitement tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de gestion, le dispositif situé à l'entrée du cœur de réseau, le procédé de traitement, le point d'accès et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communication conforme à l'invention, dans un mode particulier de réalisation ;
- les figures 2 et 3 représentent respectivement l'architecture matérielle d'un dispositif situé à l'entrée d'un cœur de réseau contrôlant un réseau d'accès mobile et d'un point d'accès de ce réseau d'accès mobile conformes à l'invention et appartenant au système de communication de la figure 1 ;
- la figure 4 illustre sous forme d'ordinogramme les principales étapes du procédé de gestion selon l'invention tel qu'il est mis en œuvre dans un mode particulier de réalisation par le dispositif de la figure 2 ;
- la figure 5 illustre sous forme d'ordinogramme les principales étapes du procédé de traitement selon l'invention tel qu'il est mis en œuvre dans un mode particulier de réalisation par le point d'accès de la figure 3 ; et
- la figure 6 représente les différents champs d'un identifiant temporaire GUTI tel que défini par le standard 3GPP.

### Description détaillée de l'invention

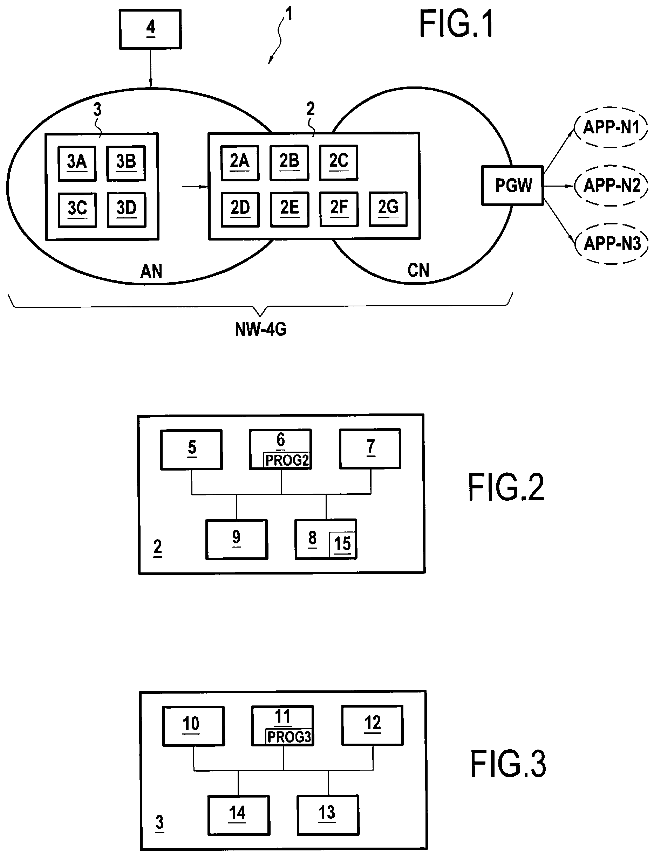

**La** **figure 1** représente, dans son environnement, un système 1 de communication conforme à l'invention. Dans l'exemple de la figure 1, le système 1 de communication se situe dans un réseau mobile NW-4G de quatrième génération (4G), comprenant un réseau d'accès mobile conforme à la norme 4G, désigné par AN, et un cœur de réseau, désigné par CN, contrôlant le réseau d'accès mobile AN. Le cœur de réseau CN permet aux différents utilisateurs du réseau mobile NW-4G, par l'intermédiaire d'une passerelle PGW (Packet Data Network GateWay), d'accéder via leurs terminaux respectifs à divers services applicatifs offerts par différents réseaux distants comme par exemple un réseau téléphonique publique IMS (IP Multimedia Subsystem) désigné par APP-N1, le réseau public Internet désigné par APP-N2, un réseau privé désigné par APP-N3, etc.

On note que dans l'exemple envisagé à la figure 1, le réseau mobile NW-4G est un réseau 4G. Cette hypothèse n'est toutefois pas limitative en soi, et l'invention s'applique à d'autres réseaux mobiles, comme par exemple à des réseaux mobiles 5G.

De façon connue en soi, le cœur de réseau CN comprend à son entrée, un dispositif 2 de gestion de la mobilité aussi désigné par MME, gérant une pluralité de terminaux. Ce dispositif MME 2 est le premier nœud à proprement parler du cœur de réseau CN (dispositif d'entrée du cœur de réseau CN au sens de l'invention), et est connecté aux points d'accès 3 du réseau d'accès mobile AN. Les points d'accès 3 sont typiquement, dans l'exemple envisagé ici d'un réseau mobile 4G, des stations de base de type eNodeB avec lesquelles communiquent les terminaux enregistrés auprès du réseau mobile par un lien radio conforme à la norme 4G. Par souci de simplification sur la figure 1, on considère une unique station de base eNodeB 3 connectée au dispositif MME 2 du cœur de réseau CN.

La station de base eNodeB 3 permet à un terminal mobile 4 géré par le dispositif MME 2 d'émettre et de recevoir des communications sur le réseau mobile 4G. La gestion des sessions de communication du terminal 4 sur le réseau mobile et le maintien de ces sessions lors de déplacements du terminal 4 est réalisée de façon connue en soi via une couche fonctionnelle appelée « strate de non-accès » (ou couche NAS), établie entre le terminal 4 et le cœur de réseau CN. Typiquement, le terminal mobile 4 envoie à destination du cœur de réseau CN et notamment du dispositif MME 2, des requêtes dites NAS relatives à cette strate de non-accès dès qu'il souhaite établir une session de communication sur le réseau mobile. Ces requêtes NAS sont transportées par un signal radio émis par le terminal mobile 4 et reçu par la station de base eNodeB 3, qui les relaie ensuite jusqu'au dispositif MME 2 pour traitement.

Conformément à la norme 4G et notamment au mécanisme prévu dans le document de spécification 3GPP TS 23.401 v15.3.0 au paragraphe 4.3.7.4.2, lorsque le dispositif MME 2 détecte que le cœur de réseau CN se trouve dans un état de surcharge, il alloue à un terminal mobile dont il reçoit une requête NAS qu'il ne peut traiter en raison de la surcharge du cœur de réseau CN, une durée de contention. Cette durée de contention est destinée à retarder l'envoi d'une nouvelle requête NAS par le terminal mobile en question pour ne pas surcharger davantage le cœur de réseau CN. Le dispositif MME 2 informe le terminal mobile de la durée de contention qui lui est allouée dans la réponse qu'il lui envoie à sa requête NAS. Lorsque le terminal mobile reçoit la réponse du dispositif MME 2 est que celle-ci contient une durée de contention, il est censé ne pas envoyer de nouvelle requête NAS à destination du cœur de réseau CN tant que la durée de contention n'a pas expiré, ou tant qu'il ne reçoit pas du réseau mobile de requête de recherche (ou « paging » en anglais). En pratique, comme mentionné précédemment, certains terminaux mobiles susceptibles de communiquer sur le réseau mobile NW-4G ne respectent pas ce mode de fonctionnement et réémettent de façon intempestive leurs requêtes NAS sans tenir compte de la durée de contention qui leur a été attribuée. On suppose ici que c'est le cas du terminal mobile 4. Dans ce document, on qualifie de « requêtes NAS illicites », les requêtes NAS émises par les terminaux connectés au réseau mobile NW-4G qui ne respectent pas la durée de contention qui leur a été attribuée.

Conformément à l'invention, le système 1 de communication permet d'améliorer la résilience du réseau mobile NW-4G lorsqu'une surcharge du cœur de réseau CN est détectée, et qu'un certain nombre de terminaux tels que le terminal mobile 4 ne respectent pas les mécanismes prévus par la norme 4G dans une telle situation. Comme détaillé davantage ultérieurement, aucune limitation n'est attachée à la façon dont l'état de surcharge du cœur de réseau est détecté. Pour améliorer la résilience du réseau mobile NW-4G, le dispositif MME 2 du système 1 de communication est configuré pour mettre en œuvre un procédé de gestion d'un état de surcharge du cœur de réseau CN selon l'invention, ce procédé s'appuyant sur l'analyse des requêtes NAS qu'il reçoit des terminaux qu'il gère communiquant sur le réseau mobile NW-4G, et plus particulièrement ici à titre illustratif, du terminal mobile 4. Le dispositif MME 2 est donc un dispositif situé à l'entrée du cœur de réseau CN aussi appelé dispositif d'entrée du cœur de réseau conforme à l'invention.

Dans le mode de réalisation décrit ici, le dispositif MME 2 dispose de l'architecture matérielle d'un ordinateur, telle que représentée schématiquement à la **figure 2****.**

Il comprend notamment un processeur 5, une mémoire morte 6, une mémoire vive 7, une mémoire non volatile 8 et des moyens de communication 9. Ces moyens de communication 9 permettent au dispositif MME 2 de communiquer avec les stations de base eNodeB 3 du réseau d'accès mobile AN (autrement dit avec les points d'accès du réseau d'accès mobile AN), via ces stations de base eNodeB 3, avec des terminaux connectés au réseau mobile NW-4G, et également avec d'autres équipements du cœur de réseau CN.

La mémoire morte 6 du dispositif MME 2 constitue un support d'enregistrement conforme à l'invention, lisible par le processeur 5 et sur lequel est enregistré un programme d'ordinateur PROG2 conforme à l'invention, comportant des instructions pour l'exécution d'un procédé de gestion selon l'invention.

Le programme PROG2 définit divers modules fonctionnels et logiciels ici du dispositif MME 2, aptes à mettre en œuvre les étapes du procédé de gestion selon l'invention et s'appuyant sur les éléments matériels 5-9 du dispositif MME 2. Ces modules fonctionnels comprennent notamment, dans le mode de réalisation décrit ici (cf. figure 1) :
- un module 2A de réception, apte à recevoir des requêtes NAS de strate de non-accès en provenance de terminaux connectés au réseau d'accès mobile qu'il gère, via les stations de base eNodeB du réseau d'accès AN (et donc en particulier ici à recevoir des requêtes NAS en provenance du terminal mobile 4 connecté à la station eNodeB 3) ;
- des modules, activés par le module de réception 2A suite à la réception d'une requête NAS d'un terminal (par exemple du terminal 4) et comprenant :
   ∘ un module 2B de détection configuré pour détecter si une durée de contention est déjà associée à ce terminal (par exemple dans un contexte maintenu dans sa mémoire non volatile 8 par le dispositif MME 2 pour ce terminal) ; et
   ∘ un module 2C d'association, activé si aucune durée de contention n'est associée au terminal, et configuré pour associer et transmettre au terminal une durée de contention destinée à être respectée par celui-ci pour l'envoi de ses requêtes NAS à destination du cœur de réseau ;
- des modules, activés si le module de détection 2B détecte qu'une durée de contention est déjà associée au terminal et n'est pas respectée par ce terminal, ces modules comprenant, dans le mode de réalisation décrit ici :
   ∘ un module 2D d'incrémentation, configuré pour incrémenter un compteur global de requêtes NAS illicites, noté CNTG, comptabilisant toutes les requêtes NAS illicites émises par les terminaux gérés par le dispositif MME 2 (ou en variante, par un sous-ensemble de ces terminaux), ainsi qu'un compteur de requêtes illicites spécifique au terminal en question, noté CNT(TERM), TERM désignant le terminal considéré (le dispositif MME 2 maintient ici un compteur spécifique pour chaque terminal qu'il gère à l'origine de requêtes NAS illicites) ;
   ∘ un module 2E de comparaison, configuré pour comparer le compteur global CNTG de requêtes NAS illicites à un premier seuil prédéterminé THRG, et pour comparer le compteur spécifique CNT(TERM) à un deuxième seuil prédéterminé THR ;
   ∘ un module 2F d'allocation, configuré pour allouer des identifiants temporaires aux terminaux mobiles ne respectant pas leurs durées de contention, activé sur détection d'événements prédéterminés, comme par exemple ici lorsque les compteurs spécifiques à ces terminaux dépassent le seuil THR ; et
   ∘ un module 2G d'envoi configuré pour envoyer aux points d'accès de la zone desservie par le dispositif MME 2, et notamment au point d'accès via lequel il a reçu la requête NAS du terminal, un message de commande comprenant au moins une partie d'un identifiant temporaire alloué au terminal par le dispositif MME 2 via son module d'allocation 2F, ce message de commande requérant un blocage par le point d'accès de tout ou partie des requêtes émises par un terminal qui contiennent ladite partie de l'identifiant temporaire alloué au terminal. Dans le mode de réalisation décrit ici, le module 2G d'envoi est activé lorsque le module 2E de comparaison détermine que le compteur global CNTG a dépassé le premier seuil prédéterminé THRG.

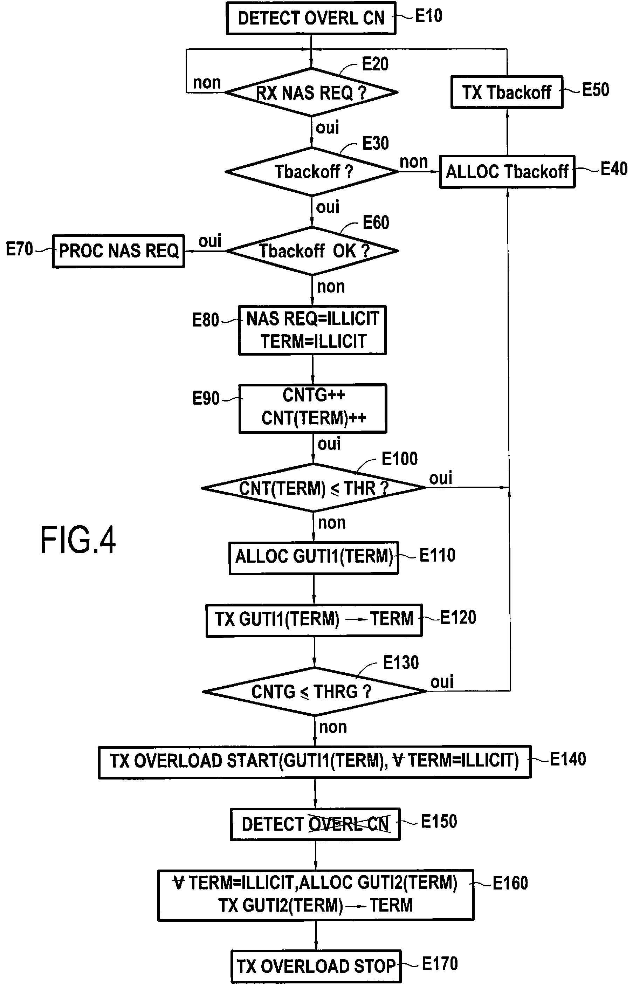

Les fonctions mises en œuvre par les modules fonctionnels 2A-2G du dispositif MME 2 sont décrites plus en détail ultérieurement en référence notamment à la figure 4 illustrant les principales étapes du procédé de gestion selon l'invention.

Comme mentionné précédemment, l'invention s'appuie, pour améliorer la résilience du réseau mobile NW-4G, non seulement sur le dispositif MME 2 mais également sur les points d'accès du réseau d'accès AN qui sont configurés par le dispositif MME 2 conformément à l'invention pour opérer un filtrage des requêtes émises par des terminaux ne respectant pas les durées de contention qui leur sont allouées. A cet effet, les points d'accès du réseau d'accès AN, et notamment la station eNodeB 3 dans l'exemple illustré à la figure 1, sont configurés pour mettre en œuvre le procédé de traitement selon l'invention ; il s'agit donc de points d'accès au réseau d'accès mobile AN conformes à l'invention.

Dans le mode de réalisation décrit ici, le point d'accès (i.e. station eNodeB) 3 a l'architecture matérielle d'un ordinateur, telle que représentée schématiquement à la **figure 3****.**

Il comprend notamment un processeur 10, une mémoire morte 11, une mémoire vive 12, une mémoire non volatile 13 et des moyens de communication 14. Ces moyens de communication 14 permettent à la station eNodeB 3 de communiquer via une liaison radio avec des terminaux connectés au réseau mobile NW-4G (et notamment avec le terminal mobile 4), ainsi qu'avec des équipements du cœur de réseau CN comme typiquement le dispositif MME 2 gérant ces terminaux mobiles, via par exemple une liaison filaire.

La mémoire morte 11 de la station eNodeB 3 constitue un support d'enregistrement conforme à l'invention, lisible par le processeur 10 et sur lequel est enregistré un programme d'ordinateur PROG3 conforme à l'invention, comportant des instructions pour l'exécution d'un procédé de traitement selon l'invention.

Le programme PROG3 définit divers modules fonctionnels et logiciels ici de la station eNodeB 3, aptes à mettre en œuvre les étapes du procédé de traitement selon l'invention et s'appuyant sur les éléments matériels 10-14 de la station eNodeB 3. Ces modules fonctionnels comprennent notamment ici (cf. figure 1) :
- un module 3A de réception, apte à recevoir en provenance d'un dispositif situé à l'entrée du cœur de réseau CN, à savoir dans l'exemple envisagé à la figure 1 du dispositif MME 2, un message de commande comprenant au moins une partie d'au moins un identifiant temporaire alloué par le dispositif MME 2 à au moins un terminal (en particulier dans l'exemple illustratif décrit ici au terminal mobile 4), ce message de commande requérant un blocage par la station eNodeB 3 de tout ou partie des messages émis par ledit au moins un terminal qui contiennent ladite au moins une partie dudit au moins un identifiant temporaire ;
- des modules, activés sur réception d'une requête reçue en provenance d'un terminal connecté au réseau mobile NW-4G (par exemple du terminal 4), et comprenant :
   ∘ un module 3B de vérification, configuré pour vérifier si la requête reçue comprend ladite au moins une partie dudit au moins un identifiant temporaire comprise dans le message de commande et doit être bloquée conformément à ce message de commande ;
   ∘ un module 3C de blocage, activé le cas échéant, pour bloquer le message au niveau de la station eNodeB 3, autrement dit ne pas le transmettre à destination du cœur de réseau CN ; et
   ∘ un module 3D de transmission, activé sinon, et configuré pour transmettre la requête au dispositif situé à l'entrée du cœur de réseau CN, c'est-à-dire dire ici au dispositif MME 2.

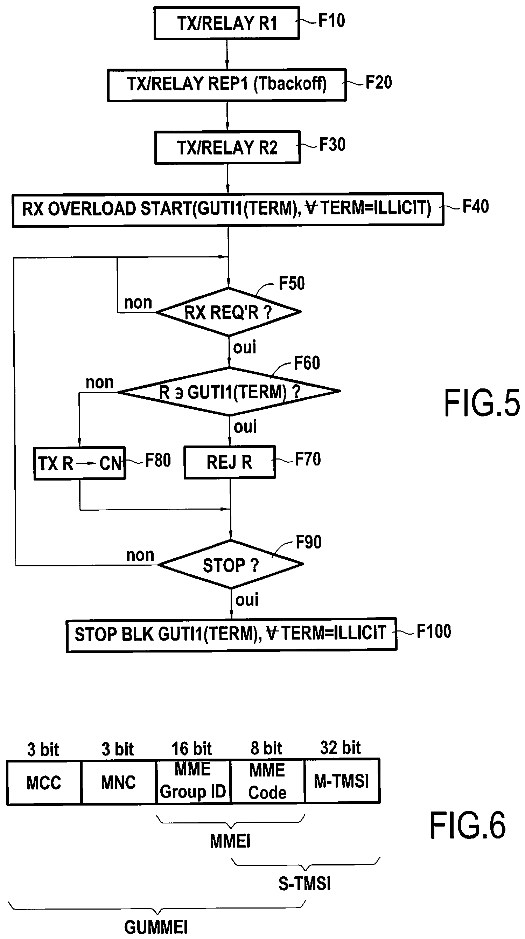

Les fonctions mises en œuvre par les modules fonctionnels 3A-3D de la station eNodeB 3 sont décrites plus en détail ci-après en référence à la figure 5 illustrant les principales étapes du procédé de traitement selon l'invention.

Nous allons maintenant décrire, en référence aux **figures 4** **et** **5** respectivement, les principales étapes d'un procédé de gestion d'un état de surcharge du cœur de réseau CN et les principales étapes d'un procédé de traitement d'un message telles qu'elles sont mises en œuvre respectivement par le dispositif MME 2 et par la station eNodeB 3 dans un mode particulier de réalisation.

En référence à la figure 4, on suppose ici que le dispositif MME 2 détecte un état de surcharge du cœur de réseau CN (étape E10). Aucune limitation n'est attachée à la façon dont le dispositif MME 2 détecte un tel état de surcharge.

Ainsi, par exemple, l'existence d'un état de surcharge du cœur de réseau CN peut être détectée de façon connue par le dispositif MME 2 à partir de la surveillance :
- d'une métrologie informatique des taux d'occupation des ressources informatiques du cœur de réseau CN (ex. CPU, mémoire, taux d'accès au stockage de masse, etc.) par les services traditionnels du système d'exploitation, ou indirectement au niveau du système d'orchestration du cœur de réseau ; et/ou
- d'une métrologie applicative, considérant le nombre de traitements en cours ou en attente (ex. sessions ou requêtes en cours de traitement) au niveau du cœur de réseau, par rapport au dimensionnement de référence du cœur de réseau.

Les différents paramètres mesurés lors de cette surveillance (par exemple périodiquement) peuvent être comparés à des seuils de surcharge prédéterminés traduisant que le cœur de réseau CN se trouve dans un état de surcharge. De tels seuils peuvent être déterminés expérimentalement ; pour plus de flexibilité, ils peuvent être dimensionnés en fonction du niveau de gravité de l'état de surcharge à partir duquel l'opérateur du réseau mobile NW-4G souhaite mettre en œuvre les procédés de gestion et de traitement selon l'invention pour améliorer la résilience du réseau mobile NW-4G (par exemple dès qu'une surcharge du cœur de réseau CN apparaît, ou si celle-ci s'aggrave au-delà d'un niveau de gravité prédéterminé, etc.).

La mise en œuvre des procédés de gestion et de traitement peut également être déclenchée en fonction d'une estimation réalisée par le dispositif MME 2, suite à la détection de la surcharge du cœur de réseau CN, de l'impact des requêtes NAS illicites sur l'état du cœur de réseau CN et notamment sur son état de charge. Cet impact peut être déterminé par exemple en mesurant la proportion de requêtes NAS illicites reçues par le dispositif MME 2 par rapport à l'ensemble du trafic, puis en évaluant l'accroissement nécessaire des ressources à engager au niveau du cœur de réseau CN pour pouvoir traiter ces requêtes NAS illicites et/ou la qualité du service en résultant. On note que l'impact sur les ressources du cœur de réseau CN des requêtes NAS illicites reçues par le dispositif MME 2 peut aller au-delà d'un simple rapport de proportionnalité si le traitement des requêtes NAT illicites nécessite notamment l'allocation de ressources supplémentaires par bloc au niveau du cœur de réseau CN, comme par exemple la création d'une nouvelle machine virtuelle. L'impact sur la qualité du service peut montrer par exemple un accroissement des longueurs des files d'attente au sein du cœur de réseau CN incompatibles avec des exigences de temps de latence réduit.

En fonction de l'impact ainsi évalué des requêtes NAS illicites sur le cœur de réseau CN et de la politique de gestion de surcharge envisagée par l'opérateur du réseau mobile NW-4G, le dispositif MME 2 peut activer ou non la mise en œuvre des procédés de gestion et de traitement selon l'invention.

On note par ailleurs que la détection d'un état de surcharge du cœur de réseau CN et/ou l'estimation de l'impact des requêtes NAS illicites sur l'état du cœur de réseau peuvent être réalisés par d'autres équipements du cœur de réseau CN que le dispositif MME 2, ces équipements étant alors configurés pour informer le dispositif MME 2 de l'état du cœur de réseau CN.

Dans le mode de réalisation décrit ici, on suppose que la détection d'un état de surcharge du cœur de réseau CN par le dispositif MME 2 à l'étape E10 déclenche la mise en œuvre des procédés de gestion et de traitement selon l'invention. Cette détection déclenche également l'initialisation à 0 de différents compteurs maintenus par le dispositif MME 2, et notamment dans le mode de réalisation décrit ici, du compteur global CNTG de requêtes illicites NAS émis par les terminaux gérés par le dispositif MME 2.

On suppose maintenant que le terminal mobile 4 émet à destination du cœur de réseau CN une première requête NAS R1 pour établir une session de communication sur le réseau mobile NW-4G. La requête NAS R1 transite par la station eNodeB 3 qui la transmet au dispositif MME 2 gérant le terminal mobile 4 (étape F10 de la figure 5).

Sur réception de la requête NAS R1 via son module 2A de réception et ses moyens de communication 9 (étape E20), le dispositif MME 2 détecte si une durée de contention a été précédemment attribuée au terminal mobile 4 (étape test E30). A cet effet, le module 2B de détection du dispositif MME 2 consulte par exemple une base de données 15 stockée dans sa mémoire non volatile 8, et contenant les contextes précédemment établis par le dispositif MME 2 pour les terminaux mobiles dont il assure la gestion.

Si le module 2B de détection ne détecte dans cette base de données 15 aucun contexte relatif au terminal mobile 4 et a fortiori/ou aucune durée de contention associée au terminal mobile 4 (réponse non à l'étape test E30), le dispositif MME 2, via son module 2C d'association, détermine pour le terminal mobile 4 une durée de contention Tbackoff(4) appropriée et l'associe au terminal mobile 4 dans la base de données 15 (étape E40). Le module 2C d'association procède à cet effet par exemple comme décrit dans la norme 4G et notamment dans la spécification 3GPP TS 23.401 v15.3.0 au paragraphe 4.3.7.4.2 (la remarque faite précédemment sur l'application de versions antérieures de ce document de spécification s'applique). Il stocke également dans le contexte du terminal mobile 4 l'instant de réception de la requête NAS R1, ainsi qu'un compteur CNT(4) de requêtes illicites spécifique au terminal mobile 4 qu'il initialise à 0.

Puis le module 2C d'association transmet au terminal mobile 4 la durée de contention Tbackoff(4) qu'il vient de lui attribuer dans un message de réponse REP1 à sa requête NAS R1 (étape E50). Ce message de réponse REP1 transite via la station eNodeB3 qui le relaie au terminal mobile 4 (étape F20 de la figure 5).

On suppose ici, qu'en dépit de la durée de contention Tbackoff(4) reçue dans le message de réponse REP1 à sa requête NAS R1, le terminal mobile 4 renvoie une nouvelle requête NAS R2 pour établir une session de communication sur le réseau mobile NW-4G sans respecter la durée de contention Tbackoff(4), autrement dit, avant l'expiration de la durée de contention Tbackoff(4) qui lui a été allouée. La requête NAS R2, qualifiée dans ce document d'illicite car ne respectant pas la durée de contention allouée au terminal mobile 4, transite par la station eNodeB 3 qui la transmet au dispositif MME 2 (étape F30 de la figure 5).

Sur réception de la requête NAS R2 via son module 2A de réception et ses moyens de communication 9 (étape E20), le dispositif MME 2 détecte si une durée de contention a été précédemment attribuée au terminal mobile 4 (étape test E30). A cet effet, comme décrit précédemment, le module 2B de détection du dispositif MME 2 consulte la base de données 15 stockée dans sa mémoire non volatile 8, et contenant les contextes précédemment établis par le dispositif MME 2 pour les terminaux mobiles dont il assure la gestion. Il détecte l'existence d'un contexte associé au terminal mobile 4 dans lequel est consignée la durée de contention Tbackoff(4) précédemment attribuée au terminal mobile 4 ainsi que l'instant de transmission de cette durée de contention Tbackoff(4) (réponse oui à l'étape test E30).

Le module 2B de détection vérifie alors si la durée de contention Tbackoff(4) attribuée au terminal mobile 4 est respectée en comparant la durée écoulée entre l'instant de transmission de la durée de contention Tbackoff(4) et l'instant de réception de la requête NAS R2 du terminal mobile 4 et la durée de contention Tbackoff(4) attribuée au terminal mobile 4 (étape test E60).

Si la durée écoulée est supérieure à la durée de contention Tbackoff(4) (réponse oui à l'étape test E60), alors cela signifie que le terminal mobile 4 a respecté la durée de contention qui lui a été attribuée, et le dispositif MME 2 traite la requête NAS R2 émise par le terminal mobile 4 (étape E70).

Sinon (réponse non à l'étape test E60), cela signifie que le terminal mobile 4 n'a pas respecté la durée de contention qui lui a été attribuée et que la requête NAS R2 reçue du terminal mobile 4 est une requête NAS « illicite » (étape E80). Comme mentionné précédemment, on suppose que c'est le cas dans l'exemple envisagé ici de la requête NAS R2. Dans le mode de réalisation décrit ici, le dispositif MME 2 ajoute alors le terminal mobile 4 à une liste de terminaux dits illicites répertoriant les terminaux qu'il gère à l'origine de requêtes NAS illicites et pour lesquels il envisage de filtrer les futures requêtes si celles-ci s'avèrent trop nombreuses, comme détaillé davantage ultérieurement.

Par ailleurs, sur détection du caractère illicite de la requête NAS R2, le dispositif MME 2, via son module d'incrémentation 2D, incrémente le compteur global CNTG de requêtes NAS illicites comptabilisant toutes les requêtes illicites émises par les différents terminaux gérés par le dispositif MME 2 (étape E90).

Dans le mode de réalisation décrit ici, le compteur global CNTG comptabilise toutes les requêtes NAS illicites de tous les terminaux gérés par le dispositif MME 2. En variante, on peut envisager que ce compteur global ne comptabilise que les requêtes NAS illicites émises par un sous-ensemble des terminaux gérés par le dispositif MME 2, et exclure notamment les requêtes illicites émises par certains terminaux comme par exemple des terminaux considérés comme prioritaires ou appartenant à certains utilisateurs (dont les requêtes NAS seront par exemple traitées même si elles sont illicites), etc. Dans cette variante, ces terminaux « exclus » ne sont pas non plus répertoriés dans la liste des terminaux illicites.

Par ailleurs, dans le mode de réalisation décrit ici, le module d'incrémentation 2D incrémente également le compteur CNT(4) de requêtes illicites spécifique au terminal mobile 4 et comptabilisant les requêtes NAS illicites émises uniquement par le terminal mobile 4 (étape E90, incrémentation des compteurs CNTG et CNT(TERM) avec TERM=4 dans l'exemple ici).

Puis le dispositif MME 2 compare, par l'intermédiaire de son module 2E de comparaison, le compteur CNT(4) de requêtes illicites spécifique au terminal mobile 4 à un seuil prédéterminé THR (étape test E100). On note que le seuil THR peut être spécifique au terminal mobile 4 ou être le même pour tous les terminaux gérés par le dispositif MME 2.

Si le compteur CNT(4) est inférieur ou égal au seuil THR (réponse oui à l'étape test E100), le dispositif MME 2 réitère ici les étapes E40 et E50, et répond au terminal mobile 4 en lui envoyant un message de réponse REP2 à sa requête NAS R2 contenant la durée de contention qu'il lui a attribuée. Cette durée de contention peut être la même que celle attribuée précédemment au terminal mobile 4 en réponse à sa requête NAS R1, ou être différente.

Dans le mode de réalisation décrit ici, si le compteur CNT(4) est supérieur au seuil THR (réponse non à l'étape test E100), le dispositif MME 2, par l'intermédiaire de son module 2F d'allocation, alloue un identifiant temporaire dédié au terminal mobile 4 destiné à être utilisé par le terminal mobile 4 pour communiquer sur le réseau mobile NW-4G et en particulier avec le cœur de réseau CN (étape E110).

Dans le mode de réalisation décrit ici, l'identifiant temporaire alloué au terminal mobile 4 est un identifiant temporaire global unique aussi appelé GUTI (Global Unique Temporary Identifier) tel que celui qui est alloué classiquement à un terminal pour communiquer sur un réseau mobile (et en particulier sur un réseau 4G ou 5G), lorsque le terminal s'attache pour la première fois au réseau. Un tel identifiant GUTI est décrit par exemple dans le document 3GPP TS 23.003 v15.3.0 au paragraphe 2.8.1 (la remarque faite précédemment sur l'application de versions antérieures de ce document de spécification s'applique).

Cet identifiant GUTI permet dans l'état de la technique, de fournir une identité unique au terminal pour communiquer sur le réseau mobile NW-4G sans dévoiler l'identification confidentielle, privée et unique qui est stockée dans sa carte SIM (aussi connue sous le nom de IMSI pour International Mobile Subscriber Identity). L'identifiant GUTI est constitué, comme illustré sur la **figure 6** **:**
- d'une première partie identifiant de manière unique le dispositif MME gérant le terminal considéré, aussi connue sous le nom de GUMMEI (Global Unique Mobility Management Entity Identifier). L'identifiant GUMMEI est construit à partir du code pays (MCC), du code opérateur (MNC) et de l'identifiant du dispositif MME ou MMEI (pour MME Identifier), l'identifiant MMEI étant lui-même constitué d'un identifiant de groupe MME (ou MME Group ID) et d'un code MME (MME Code) ; et
- d'une deuxième partie identifiant de manière unique le terminal considéré parmi des terminaux gérés par le dispositif MME en question, aussi connue sous le nom M-TMSI (pour MME Temporary Mobile Subscriber Identity).

On note ici GUTI0(4) l'identifiant GUTI qui a été alloué au terminal mobile 4 par le dispositif MME 2 lors de son attachement au réseau NW-4G conformément à l'état de la technique (i.e. en réponse à une requête NAS attach request envoyée par le terminal comme décrit par exemple dans le document de spécification 3GPP TS 23.401 v15.3.0 au paragraphe 5.3.2.1 (étape 17)), et que le terminal mobile 4 utilise pour communiquer jusqu'à présent sur le réseau NW-4G (i.e. cet identifiant temporaire GUTI0(4) est inclus dans tous les messages et requêtes issus du terminal mobile 4).

Autrement dit, dans le mode de réalisation décrit ici, sur détection du dépassement du seuil THR par le compteur CNT(4) de requêtes NAS illicites spécifique au terminal mobile 4, le dispositif MME 2 déclenche l'allocation d'un nouvel identifiant temporaire GUTI1(4) au terminal mobile 4 en remplacement de l'identifiant temporaire GUTI0(4) qui lui avait été précédemment alloué (par le dispositif MME 2 déjà) pour communiquer sur le réseau mobile NW-4G lors de son attachement au réseau.

Lors de la génération du nouvel identifiant temporaire GUTI1(4) et notamment de la partie correspondant au M-TMSI, le module 2F d'allocation peut par exemple utiliser un masque commun dédié aux terminaux illicites (par exemple, les 16 premiers bits du M-TMSI positionnés à 1), combiné à un élément supplémentaire identifiant de manière unique le terminal 4 parmi les terminaux mobiles illicites gérés par le dispositif MME 2.

Le dispositif MME 2 communique ensuite au terminal mobile 4 l'identifiant temporaire GUTI1(4) qu'il vient de lui allouer pour communiquer sur le réseau mobile NW-4G et avec le cœur de réseau CN notamment (étape E120). Il procède à cet effet en incluant l'identifiant temporaire GUTI1(4) dans le message de réponse REP2 à la requête NAS R2, ou dans une commande « GUTI reallocation ». Cette procédure est décrite notamment dans les documents 3GPP TS 23.401 v15.3.0 au paragraphe 5.3.7 et TS 24.301 v15.1.0 au paragraphe 5.4.1. Dès lors, le terminal mobile 4 est configuré pour utiliser cet identifiant temporaire GUTI1(4) lorsqu'il communique sur le réseau mobile NW-4G, et en particulier lorsqu'il envoie des requêtes NAS à destination du cœur de réseau CN. Autrement dit, lorsque le terminal mobile 4 envoie une requête à destination du réseau mobile NW-4G, il inclut dans cette requête son nouvel identifiant temporaire GUTI1(4) qui l'identifie de manière unique sur le réseau mobile NW-4G.

On note que si un autre type d'identifiant temporaire qu'un GUTI est utilisé dans la mise en œuvre de l'invention, la transmission de cet identifiant temporaire au terminal mobile 4 déclenche la configuration du terminal mobile 4 pour que celui-ci utilise dans ses requêtes émises à destination du réseau mobile NW-4G et plus particulièrement du cœur de réseau CN cet identifiant temporaire.

Le dispositif MME 2 stocke par ailleurs l'identifiant temporaire GUTI1(4) nouvellement alloué au terminal mobile 4 dans le contexte associé à ce dernier dans la base de données 15.

On note que dans le mode de réalisation décrit ici, on considère comme identifiant temporaire, un identifiant temporaire (à savoir le GUTI) déjà défini et utilisé classiquement sur les réseaux mobiles 4G pour identifier un terminal. Ceci permet de s'appuyer sur des procédures déjà définies dans un réseau 4G de génération de GUTI, de transmission de GUTI aux terminaux, mais également d'utilisation de ces GUTI par les terminaux pour communiquer sur le réseau 4G, et donc de faciliter l'implémentation de l'invention. La mise en œuvre de l'invention, dans ce mode de réalisation, est typiquement transparente pour les terminaux mobiles.

Toutefois, cette hypothèse n'est pas limitative, et l'invention peut également s'appuyer sur un autre type d'identifiant temporaire, qui vient s'ajouter aux identifiants temporaires déjà définis dans la norme, dès lors que celui-ci permet d'identifier de manière unique le terminal mobile 4 sur le réseau mobile NW-4G et est utilisé par celui-ci pour communiquer sur le réseau mobile NW-4G et avec le cœur de réseau CN.

Le dispositif MME 2, via son module 2E de comparaison, compare ensuite la valeur du compteur global CNTG de requêtes NAS illicites avec un seuil prédéterminé THRG (étape test E130). Ce seuil THRG est utilisé dans le mode de réalisation décrit ici pour déclencher le filtrage des requêtes NAS illicites par les points d'accès du réseau d'accès AN. Il est paramétrable par l'opérateur du réseau mobile NW-4G (et du cœur de réseau CN), et est préférentiellement supérieur au seuil THR utilisé pour les compteurs spécifiques aux terminaux, le compteur CNTG étant un compteur global comptabilisant ici les requêtes NAS illicites de tous les terminaux gérés par le dispositif MME 2 (ou tout du moins pour tous les terminaux consignés dans la liste de terminaux illicites maintenue à jour par le dispositif MME 2). Il peut être déterminé en fonction notamment de l'impact des requêtes illicites sur le cœur de réseau CN et/ou sur son état de surcharge.

Si le compteur global CNTG est inférieur ou égal au seuil THRG (réponse oui à l'étape test E130), le dispositif MME 2 réitère les étapes E40 et E50, comme décrit précédemment lorsqu'il détecte que le compteur CNT(4) est inférieur ou égal au seuil THR.

Si le module 2E de comparaison détermine que le compteur global CNTG est supérieur au seuil THRG (réponse non à l'étape test E130), le filtrage des requêtes NAS illicites au niveau des points d'accès du réseau d'accès AN est déclenché par le dispositif MME 2 conformément à l'invention.

A cet effet, le module 2G d'envoi du dispositif MME 2 envoie ici à la station eNodeB 3 un message de commande comprenant les identifiants temporaires alloués par le dispositif MME 2 à tous les terminaux répertoriés dans la liste de terminaux illicites maintenue par le dispositif MME 2 (ou au moins une partie représentative de chacun de ces identifiants temporaires, qui est susceptible d'être détectée par la station eNodeB 3 dans les messages envoyés par les terminaux transitant par cette station eNodeB 3), et requérant un blocage par la station eNodeB 3 de tout ou partie des requêtes émises par ces terminaux (étape E140). Ces requêtes peuvent être avantageusement identifiées par la station de base eNodeB 3 car elles contiennent les identifiants temporaires GUTI1(TERM) alloués par le dispositif MME 2 aux terminaux de la liste des terminaux illicites ou au moins la partie représentative de ces identifiants temporaires permettant à la station de base eNodeB 3 de discriminer les requêtes qui doivent être filtrées.

Dans un mode particulier de réalisation, le message de commande envoyé par le module 2G d'envoi peut contenir uniquement les masques ayant servi à la génération des identifiants temporaires GUTI1(TERM) alloués aux terminaux de la liste des terminaux illicites (autrement dit uniquement une partie de ces identifiants temporaires correspondant aux masques utilisés pour les générer), pour blocage des requêtes comprenant des identifiants temporaires alloués aux terminaux qui ont généré ces requêtes contenant les masques en question. En pratique, d'autres parties des identifiants temporaires peuvent être transmises à la station eNodeB 3 pour identifier les requêtes devant être filtrées, dès lors que ces parties sont représentatives d'identifiants de terminaux susceptibles de ne pas appliquer les durées de contention qui leur sont allouées et que les terminaux sont configurés pour inclure au moins ces parties des identifiants temporaires dans les requêtes qu'ils envoient et qui transitent par la station eNodeB 3.

Dans une autre variante, les identifiants temporaires (ou une partie de ces identifiants temporaires) des terminaux mobiles appartenant à la liste de terminaux illicites peuvent être envoyés séparément au point d'accès 3, par exemple lorsque le compteur spécifique associé à chacun de ces terminaux dépasse un seuil prédéterminé.

Dans une autre variante, l'événement déclencheur de l'envoi du message de commande au point d'accès peut être la détection d'un niveau de charge du cœur de réseau CN supérieur à un seuil prédéterminé considéré comme requérant une intervention du dispositif 2 et un renforcement de la politique de congestion appliquée pour sortir le cœur de réseau CN de son état de surcharge.

Dans le mode de réalisation décrit ici, le message de commande envoyé par le module 2G à la station de base eNodeB 3 est un message OVERLOAD START tel que décrit dans la spécification 3GPP TS 23.401 au paragraphe 4.3.7.4.1 pour les réseaux mobiles 4G, adapté de sorte à contenir une partie des identifiants temporaires GUTI1(Term) (par exemple dans un champ prévu à cet effet dans le message OVERLOAD START), et plus particulièrement la partie de ces identifiants correspondant au S-TMSI (noté S-TMSI1(Term)) qui est constitué, pour chaque identifiant GUTI alloué à un terminal, du code MME et de l'identifiant M-TMSI alloué à ce terminal (voir figure 6). Il convient de noter que dans les réseaux mobiles 4G, les terminaux sont configurés pour utiliser pour communiquer avec le cœur de réseau, au niveau de la strate de non-accès (NAS), l'identifiant GUTI dans son intégralité, tandis qu'ils communiquent avec les stations eNode B, au niveau de la strate d'accès, en utilisant une partie seulement du GUTI, à savoir la partie correspondant au S-TMSI.

On note par ailleurs que chaque S-TMSI extrait d'un identifiant temporaire GUTI alloué à un terminal est lui-même à proprement parler un identifiant temporaire alloué à ce terminal au sens de l'invention, si bien que dans la suite de la description on désigne parfois également les S-TMSI par « identifiants temporaires S-TMSI ».

Dans un autre mode de réalisation, les identifiants temporaires GUTI1(Term) sont transmis dans leur intégralité à la station de base eNodeB 3 dans le message de commande.

En outre, dans le cas où seule une partie des requêtes émises par les terminaux désignés par ces identifiants doivent être filtrées par le point d'accès 3 (par exemple toutes les requêtes émises par les terminaux à l'exception de celles liées à un service d'urgence), une mention complémentaire spécifiant les requêtes qui doivent être filtrées ou au contraire spécifiant celles que le point d'accès doit laisser passer et transmettre au dispositif MME 2 est ajoutée dans le message de commande envoyé par le module 2F. On considère ici qu'en l'absence de mention explicite dans le message OVERLOAD START, la station eNodeB 3 doit filtrer toutes les requêtes sans exception émises par les terminaux dont elle a reçus les identifiants temporaires dans le message de commande (ou correspondant aux masques reçus).

On note que le message de commande peut comprendre en outre une indication temporelle spécifiant la durée pendant laquelle la station eNodeB3 doit filtrer les requêtes des terminaux de la liste des terminaux illicites. On considère ici que si aucune indication temporelle n'est fournie dans le message OVERLOAD START, la station eNodeB 3 applique le filtrage des requêtes jusqu'à mention contraire du dispositif MME 2.

Dans un autre mode de réalisation, on peut envisager l'utilisation d'un autre type de message qu'un message OVERLOAD START pour activer le filtrage des requêtes par la station eNodeB 3, par exemple un message de signalisation dédié à cet effet.

En outre dans l'exemple envisagé ici, par souci de simplification, on considère une unique station eNodeB 3 rattachée au dispositif MME 2 et *a fortiori* la transmission du message de commande contenant les identifiants S-TMSI1(TERM) des terminaux illicites à cette unique station eNodeB 3. Toutefois lorsque plusieurs stations eNode B sont rattachées au dispositif MME 2, celui-ci transmet préférentiellement le message de commande contenant les identifiants temporaires des terminaux illicites à filtrer à l'ensemble des stations eNode B qui lui sont rattachées, et pas uniquement aux stations eNode B auxquelles sont connectés les terminaux illicites. Ceci permet de tenir compte d'une éventuelle mobilité des terminaux.

En référence à la **figure 5****,** la station eNodeB 3 reçoit, via son module 3A de réception et ses moyens de communication 14, le message de commande OVERLOAD START transmis par le dispositif MME 2 (étape F40), et extrait de ce message de commande, les identifiants temporaires S-TMSI1(Term) dérivés des identifiants temporaires GUTI1(TERM) (ou les masques le cas échéant) des terminaux dont il doit filtrer les requêtes. Elle stocke en mémoire ces identifiants temporaires, par exemple dans sa mémoire non volatile 13.

Dès lors, sur réception d'une requête R émise par un terminal enregistré auprès du réseau mobile NW-4G (réponse oui à l'étape test F50), telle que par exemple une requête RRC Connection Request (telle que décrite notamment dans le document de spécification 3GPP TS 36.331 v15.3.0 aux paragraphes 5.3.3.1 et 5.3.3.3) émise par le terminal mobile 4, la station eNodeB 3 vérifie, via son module 3B de vérification, si cette requête contient l'un des identifiants temporaires S-TMSI1(Term) transmis dans le message de commande du dispositif MME 2 (étape test F60). Dans le mode de réalisation décrit, les identifiants temporaires communiqués à la station eNodeB 3 étant des identifiants S-TMSI (utilisés par les terminaux au niveau de la strate d'accès), le module 3B de vérification analyse à cet effet le contenu du champ ue-Identity de la requête reçue R et compare l'identifiant S-TMSI compris dans ce champ avec la liste des identifiants temporaires S-TMSI1(TERM) stockés dans sa mémoire non volatile 13 (ou des masques, le cas échéant).

Dans l'exemple décrit ici où toutes les requêtes émanant de terminaux utilisant les identifiants temporaires S-TMSI1(TERM) doivent être filtrées inconditionnellement par la station eNodeB 3, si l'identifiant S-TMSI compris dans la requête R coïncide avec l'un des identifiants temporaires S-TMSI1(TERM) (ou correspond le cas échéant à l'un des masques stockés ou à l'identifiant temporaire GUTI1(TERM)) (réponse oui à l'étape test F60), la station eNodeB3, via son module 3C de blocage, bloque la requête R : par blocage, on entend ici qu'elle ne transmet pas cette requête au cœur de réseau CN et notamment au dispositif MME 2, mais la rejette ou la détruit (étape F70). Il en résulte *a fortiori* que les terminaux filtrés ne sont plus en mesure d'aggraver la surcharge du cœur de réseau CN avec des requêtes NAS illicites puisque les requêtes de ces terminaux ne sont plus transmises jusqu'à ce dernier.

Au contraire, si l'identifiant S-TMSI compris dans la requête R ne coïncide avec aucun des identifiants temporaires S-TMSI1(TERM) (ou ne correspond à aucun des masques stockés ou à un des GUTI stockés) (réponse non à l'étape test F60), la station eNodeB3, via son module 3D de transmission, transmet la requête R au dispositif MME 2 (étape F80). On note que la station eNodeB 3 procède de la même façon (i.e. elle transmet la requête R au dispositif MME 2) si en dépit du fait que la requête R contienne un identifiant S-TMSI coïncidant avec l'un des identifiants S-TMSI1(TERM), la requête R ne vérifie pas les critères de blocage mentionnés le cas échéant dans le message de commande.

La station eNode B 3 réitère les étapes F60 à F80 pour chaque requête R en provenance de terminaux qui transite par elle tant qu'elle n'a pas reçu d'instruction contraire du dispositif MME 2, ou dans l'hypothèse où une durée d'application du blocage des requêtes lui a été communiquée dans le message de commande, tant que cette durée n'est pas écoulée (réponse non à l'étape F90).

On suppose maintenant ici que le dispositif MME 2 détecte (lui-même ou via un autre équipement) que le cœur de réseau CN n'est plus dans un état de surcharge (étape E150 sur la figure 4).

Dans le mode de réalisation décrit ici, le dispositif MME 2 est configuré pour, en réponse à cette détection, désactiver le filtrage opéré par la station eNodeB 3. A cet effet, le dispositif MME 2 transmet à la station eNodeB 3 par l'intermédiaire de son module 2G d'envoi un message de désactivation du blocage des requêtes de ces terminaux (étape E170).

Dans le mode de réalisation décrit ici, si par ailleurs, il est estimé que le fonctionnement illicite d'un certain terminal a été corrigé, le dispositif MME 2 via son module 2F d'allocation alloue un nouvel identifiant temporaire GUTI2(TERM) au terminal afin de lui permettre de sortir du groupe de terminaux illicites (étape E160). L'allocation lors de l'étape E160 d'un nouvel identifiant temporaire GUTI2(TERM) à des terminaux répertoriés dans sa liste de terminaux illicites est réalisée de la même façon qu'à l'étape E110 précédemment décrite. Les identifiants temporaires GUTI2(TERM) sont ensuite communiqués aux terminaux correspondant pour être utilisés par ceux-ci pour communiquer sur le réseau mobile NW-4G, en particulier avec le cœur de réseau CN, comme indiqué pour l'étape E120. On note que l'étape E160 peut être mise en œuvre indifféremment avant, après ou concomitamment avec l'étape E170.

Par ailleurs, dans le mode de réalisation décrit ici, le message de désactivation envoyé par le module 2G à la station de base eNodeB 3 est un message OVERLOAD STOP tel que décrit la spécification 3GPP TS 23.401 au paragraphe 4.3.7.4.1 pour les réseaux mobiles 4G. Un tel message est prévu dans la spécification 3GPP pour annuler les effets d'un message OVERLOAD START envoyé précédemment.

En référence à la figure 5, sur réception du message de désactivation OVERLOAD STOP (réponse oui à l'étape F90), la station eNodeB 3 arrête le blocage des requêtes contenant les identifiants temporaires S-TMSI1(TERM) (étape F100). Dans le mode de réalisation décrit ici, elle supprime les identifiants temporaires S-TMSI1(TERM) de sa mémoire non volatile. Dès lors, chaque requête nouvellement reçue par la station eNodeB 3 est transférée au dispositif MME 2, sans opérer de filtrage.

Dans le mode de réalisation décrit ici, on a considéré que les identifiants temporaires alloués par le dispositif MME 2 aux terminaux illicites étaient des identifiants GUTI et que seule une partie de ces identifiants permettant de discriminer (i.e. reconnaître, identifier) les requêtes émanant de ces terminaux illicites, à savoir les identifiants S-TMSI, était transmise aux stations de base eNodeB 3, tandis que les identifiants temporaires GUTI sont transmis dans leur intégralité aux terminaux auxquels ils ont été alloués. Ce mode de réalisation permet de réutiliser et le cas échéant d'adapter des procédures d'allocation et de transmission (ainsi que des messages) existantes de l'état de la technique. Selon une autre interprétation, on peut considérer que les S-TMSI sont des identifiants temporaires au sens de l'invention alloués aux terminaux qui sont transmis dans leur intégralité aux stations eNodeB, et intégrés dans des identifiants plus complets, à savoir les GUTI lorsqu'ils sont transmis aux terminaux.

Dans le mode de réalisation décrit ici, le réseau mobile NW-4G est un réseau mobile 4G. Toutefois, l'invention s'applique à d'autres réseaux mobiles, et notamment à un réseau mobile 5G. Pour un tel réseau 5G, le dispositif situé en entrée du cœur de réseau et configuré pour mettre en œuvre le procédé de gestion selon l'invention est par exemple un équipement AMF (Access and Mobility management Function) de gestion de la mobilité et de l'accès au cœur de réseau, éventuellement associé à un équipement SMF (Session Management Function) de gestion de session du cœur de réseau pour la mise en œuvre des étapes E10, E40 et E50 (c'est-à-dire pour l'allocation et la transmission des durées de contention, l'équipement AMF se trouvant sur le chemin entre les terminaux et l'équipement SMF, étant alors configuré pour mémoriser les durées de contention allouées par l'équipement SMF et transmettre ces durées de contention aux terminaux concernés). Des messages OVERLOAD START et OVERLOAD STOP pouvant être utilisés pour mettre en œuvre l'invention sont définis par la norme et sont décrits notamment dans le document 3GPP TS 23.501 au paragraphe 5.19.5.

L'invention qui vient d'être décrite permet d'améliorer facilement la résilience du réseau mobile considéré. En complément des procédés de gestion et de traitement selon l'invention, d'autres mesures peuvent être mises en œuvre pour gérer l'état de surcharge du cœur de réseau CN.

Ainsi, par exemple, le dispositif MME 2 peut transmettre les identifiants permanents ou temporaires des terminaux appartenant à la liste de terminaux illicites qu'il maintient à d'autres entités du cœur de réseau et notamment aux entités PCC (Policy and Charging Control) de contrôle de la charge du cœur de réseau, qui pourront appliquer envers les propriétaires de ces terminaux des actions spécifiques, telles qu'une réduction du débit de données dont ils bénéficient, ou l'imposition d'une pénalité.

Selon un autre exemple, l'opérateur du cœur de réseau CN peut utiliser le compteur spécifique CNT(TERM) maintenu par le dispositif MME 2 pour chaque terminal ayant un comportement illicite pour adapter sa stratégie en conséquence sur le plan commercial : notamment, l'opérateur pourra par exemple exiger des fabricants de configurer leurs terminaux de manière à ce qu'ils respectent le principe de fonctionnement préconisé par la norme par rapport aux durées de contention.

Selon un autre exemple encore, le dispositif MME 2 peut enregistrer le comportement illicite de chaque terminal (par exemple dans un fichier CDR pour Charging Data Record) afin que l'opérateur du cœur de réseau CN puisse adapter sa stratégie en conséquence au niveau de la supervision de réseau, ou pour appliquer une taxation spécifique au propriétaire du terminal pour non-respect de la norme.

Bien entendu ces exemples ne sont donnés qu'à titre illustratif et ne sont pas limitatifs en soi.

## Revendications

1. Procédé de gestion d'un état de surcharge d'un cœur de réseau (CN) contrôlant un réseau d'accès mobile (AN), ce procédé de gestion étant destiné à être mis en œuvre par un dispositif (2) situé à l'entrée du cœur de réseau, ledit procédé de gestion comprenant, pour au moins un terminal (4) connecté au réseau d'accès mobile via un point d'accès (3) et géré par ledit dispositif, suite à une réception (E20) d'une requête de strate de non-accès, dite requête NAS, en provenance dudit terminal :
- une étape (E30) de détection si une durée de contention est associée à ce terminal ;
- si aucune durée de contention n'est associée au terminal, une étape d'association (E40) et de transmission (E50) audit terminal d'une durée de contention destinée à être appliquée par celui-ci pour l'envoi de requêtes NAS au cœur de réseau ;
ledit procédé étant **caractérisé en ce qu'**il comprend en outre, si lors de l'étape (E30) de détection, il est détecté qu'une durée de contention est associée au terminal et n'a pas été respectée par celui-ci (E60), une étape (E110) d'envoi au terminal par le dispositif situé à l'entrée du cœur de réseau, via le point d'accès, d'un identifiant temporaire alloué au terminal pour communiquer avec le cœur de réseau, et une étape (E140) d'envoi au point d'accès, par le dispositif situé à l'entrée du cœur de réseau, d'un message de commande comprenant au moins une partie dudit identifiant temporaire, ce message de commande requérant un blocage par le point d'accès de tout ou partie des requêtes émises par un terminal qui contiennent ladite au moins une partie dudit identifiant temporaire.

2. Procédé de gestion selon la revendication 1 comprenant en outre, si lors de l'étape de détection, il est détecté qu'une durée de contention est associée au terminal et n'a pas été respectée par ce terminal, une étape d'incrémentation (E90) d'un compteur global (CNTG) de requêtes NAS dites illicites associé à un ensemble comprenant une pluralité de terminaux dits illicites gérés par le dispositif situé à l'entrée du cœur de réseau et ne respectant pas les durées de contention qui leur ont été allouées, l'étape d'envoi au point d'accès du message de commande étant déclenchée lorsque le dispositif situé à l'entrée du cœur de réseau détecte que le compteur global est supérieur à un seuil prédéterminé.

3. Procédé de gestion selon la revendication 2 dans lequel le message de commande comprend au moins une partie de chaque identifiant temporaire alloué pour communiquer avec le cœur de réseau à chaque terminal de l'ensemble des terminaux illicites, le message de commande requérant le blocage par le point d'accès de tout ou partie des requêtes contenant lesdites parties des identifiants temporaires alloués aux terminaux de l'ensemble de terminaux illicites.

4. Procédé de gestion selon l'une quelconque des revendications 1 à 3 dans lequel l'étape d'envoi au point d'accès du message de commande est déclenchée lorsque le dispositif situé à l'entrée du cœur de réseau détecte un niveau de charge du cœur de réseau supérieur à un seuil prédéterminé.

5. Procédé de gestion selon l'une quelconque des revendications 1 à 4 comprenant en outre, si lors de l'étape de détection, il est détecté qu'une durée de contention est associée au terminal et n'est pas respectée par ce terminal, une étape d'incrémentation (E90) d'un compteur (CNT(TERM)) de requêtes NAS illicites spécifique au terminal, l'identifiant temporaire étant alloué au terminal par le dispositif situé à l'entrée du cœur de réseau lorsque ledit dispositif détecte un dépassement par le compteur spécifique au terminal d'un seuil prédéterminé.

6. Procédé de gestion selon l'une quelconque des revendications 1 à 5 dans lequel l'identifiant temporaire alloué au terminal est un identifiant temporaire global unique ou GUTI conforme à la spécification 3GPP TS 23.003, v15.3.0.

7. Procédé de gestion selon l'une quelconque des revendications 1 à 6 dans lequel le message de commande est un message OVERLOAD START conforme à la spécification 3GPP TS 23.401 v15.3.0 ou à la spécification 3GPP TS 23.501 v15.1.0, ledit message OVERLOAD START étant modifié pour requérir un blocage par le point d'accès de tout ou partie des requêtes émises par un terminal qui contiennent ladite au moins une partie dudit identifiant temporaire.

8. Procédé de gestion selon l'une quelconque des revendications 1 à 7 comprenant en outre, sur détection par le dispositif situé à l'entrée du cœur de réseau d'une cessation de l'état de surcharge du cœur de réseau, une étape d'envoi (E170) au point d'accès d'un message de désactivation du blocage des requêtes.

9. Procédé de gestion selon la revendication 8 dans lequel le message de désactivation est un message OVERLOAD STOP conforme à la spécification 3GPP TS 23.401 v15.3.0 ou à la spécification 3GPP TS 23.501 v15.1.0.

10. Procédé de gestion selon l'une quelconque des revendications 1 à 9 comprenant une étape d'allocation audit au moins un terminal d'un nouvel identifiant temporaire et une étape d'envoi de ce nouvel identifiant temporaire audit au moins un terminal pour communiquer avec le cœur de réseau.

11. Procédé de gestion selon l'une quelconque des revendications 1 à 10 dans lequel le message de commande requiert un blocage par le point d'accès de toutes les requêtes émises par un terminal qui contiennent ladite au moins une partie de l'identifiant temporaire à l'exception des requêtes relatives à un service d'urgence.

12. Programme d'ordinateur (PROG2,PROG3) comportant des instructions pour l'exécution des étapes du procédé de gestion selon l'une quelconque des revendications 1 à 11.

13. Support d'enregistrement lisible par un ordinateur sur lequel est enregistré un programme d'ordinateur selon la revendication 12.

14. Dispositif (2) situé à l'entrée d'un cœur de réseau contrôlant un réseau d'accès mobile, apte à gérer un état de surcharge du cœur de réseau et comprenant :
- un module (2A) de réception, apte à recevoir une requête de strate de non-accès, dite requête NAS, en provenance d'au moins un terminal connecté au réseau d'accès mobile via un point d'accès et géré par ledit dispositif ;
- des modules, activés pour au moins un dit terminal par le module de réception suite à la réception d'une requête NAS dudit terminal, ces modules comprenant :
∘ un module (2B) de détection configuré pour détecter si une durée de contention est associée audit terminal ; et
∘ un module (2C) d'association, activé si aucune durée de contention n'est associée audit terminal, et configuré pour associer et transmettre audit terminal une durée de contention destinée à être appliquée par celui-ci pour l'envoi de requêtes NAS au cœur de réseau ;
le dispositif étant **caractérisé en ce qu'**il comprend en outre un module (2F) d'envoi activé si le module de détection détecte qu'une durée de contention est associée au terminal et n'a pas été respectée par celui-ci, ledit module d'envoi étant configuré pour envoyer au terminal, via le point d'accès, un identifiant temporaire alloué au terminal pour communiquer avec le cœur de réseau, et pour envoyer au point d'accès un message de commande comprenant au moins une partie dudit identifiant temporaire, ce message de commande requérant un blocage par le point d'accès de tout ou partie des requêtes émises par un terminal qui contiennent ladite au moins une partie de l'identifiant temporaire.

15. Système de communication (1) comprenant :
- un dispositif (2) selon la revendication 14 situé à l'entrée d'un cœur de réseau contrôlant un réseau d'accès mobile ; et
- au moins un point d'accès (3) du réseau d'accès mobile, ce point d'accès comprenant :
∘ un module (3A) de réception, apte à recevoir en provenance dudit dispositif situé à l'entrée du cœur de réseau, un message de commande comprenant au moins une partie d'au moins un identifiant temporaire alloué par ledit dispositif à au moins un terminal géré par ce dispositif pour communiquer avec le cœur de réseau et n'ayant pas respecté une durée de contention qui lui a été associée, ladite au moins une partie dudit au moins un identifiant temporaire étant utilisée par ledit au moins un terminal lors de ses communications avec ledit point d'accès et permettant au point d'accès d'identifier des requêtes provenant dudit terminal, ce message de commande requérant un blocage par le point d'accès de tout ou partie des requêtes émises par un terminal qui contiennent ladite au moins une partie dudit identifiant temporaire ;
∘ des modules, activés sur réception d'une requête reçue en provenance d'un terminal, et comprenant :
▪ un module (3B) de vérification, configuré pour vérifier si la requête reçue comprend ladite au moins une partie dudit au moins un identifiant temporaire comprise dans le message de commande et doit être bloquée conformément au message de commande ;
▪ un module (3C) de blocage, activé le cas échéant, pour bloquer la requête au niveau du point d'accès ; et
▪ un module (3D) de transmission, activé sinon, et configuré pour transmettre la requête au dispositif situé à l'entrée du cœur de réseau.

16. Système de communication (1) selon la revendication 15 dans lequel le dispositif (2) situé à l'entrée du cœur de réseau est :
- un équipement SGSN (Serving GPRS Support Node) lorsque le réseau d'accès mobile est un réseau de deuxième ou troisième génération ; ou
- un équipement MME (Mobility Management Entity) de gestion de la mobilité lorsque le réseau d'accès mobile est un réseau de quatrième génération ; ou
- un équipement AMF (Access and Mobility management Function) de gestion de la mobilité et de l'accès lorsque le réseau d'accès mobile est un réseau de cinquième génération.

## Patentansprüche

1. Verfahren zur Verwaltung eines Überlastungszustands eines ein Mobilfunkzugangsnetz (AN) steuernden Netzwerkkerns (CN), wobei dieses Verwaltungsverfahren dazu bestimmt ist, von einer Vorrichtung (2) ausgeführt zu werden, die am Eingang des Netzwerkkerns gelegen ist, wobei das Verwaltungsverfahren für mindestens ein Endgerät (4), das mit dem Mobilfunkzugangsnetzwerk über einen Zugangspunkt (3) verbunden ist und von der Vorrichtung verwaltet wird, nach einem Empfangen (E20) einer von dem Endgerät kommenden Non-Access-Stratum-Anforderung, NAS-Anforderung genannt, umfasst:
- einen Schritt (E30) des Detektierens, ob diesem Endgerät eine Backoff-Dauer zugeordnet ist;
- wenn dem Endgerät keine Backoff-Dauer zugeordnet ist, einen Schritt des Zuordnens (E40) und Übertragens (E50) einer Backoff-Dauer zu dem Endgerät, die dazu bestimmt ist, von diesem beim Senden von NAS-Anforderungen an den Netzwerkkern angewandt zu werden;
wobei das Verfahren **dadurch gekennzeichnet ist, dass** es ferner, wenn bei dem Schritt (E30) des Detektierens detektiert wird, dass dem Endgerät eine Backoff-Dauer zugeordnet ist und von diesem nicht beachtet worden ist (E60), einen Schritt (E110) des Sendens einer dem Endgerät zugewiesenen temporären Kennung zum Kommunizieren mit dem Netzwerkkern durch die am Eingang des Netzwerkkerns gelegene Vorrichtung, über den Zugangspunkt, an das Endgerät und einen Schritt (E140) des Sendens einer Steuernachricht, die mindestens einen Teil der temporären Kennung umfasst, durch die am Eingang des Netzwerkkerns gelegene Vorrichtung an den Zugangspunkt umfasst, wobei diese Steuernachricht eine Blockierung aller oder eines Teils der von einem Endgerät gesendeten Anforderungen, die den mindestens einen Teil der temporären Kennung enthalten, durch den Zugangspunkt anfordert.

2. Verwaltungsverfahren nach Anspruch 1, umfassend ferner, wenn bei dem Schritt des Detektierens detektiert wird, dass dem Endgerät eine Backoff-Dauer zugewiesen ist und von diesem Endgerät nicht beachtet worden ist, einen Schritt des Inkrementierens (E90) eines Gesamtzählers (CNTG) für sogenannte unerlaubte NAS-Anforderungen, der einer Gruppe zugeordnet ist, die eine Mehrzahl von sogenannten unerlaubten Endgeräten umfasst, die von der am Eingang des Netzwerkkerns gelegenen Vorrichtung verwaltet werden und die Backoff-Dauern, die ihnen zugewiesen worden sind, nicht beachtet haben, wobei der Schritt des Sendens der Steuernachricht an den Zugangspunkt ausgelöst wird, wenn die am Eingang des Netzwerkkerns gelegene Vorrichtung detektiert, dass der Gesamtzähler über einem vorbestimmten Schwellenwert liegt.

3. Verwaltungsverfahren nach Anspruch 2, wobei die Steuernachricht mindestens einen Teil jeder temporären Kennung umfasst, die jedem Endgerät der Gruppe der unerlaubten Endgeräte zum Kommunizieren mit dem Netzwerkkern zugewiesen wurde, wobei die Steuernachricht das Blockieren aller oder eines Teils der Anforderungen, die die Teile der den Endgeräten der Gruppe von unerlaubten Endgeräten zugewiesenen temporären Kennungen enthalten, durch den Zugangspunkt anfordert.

4. Verwaltungsverfahren nach einem der Ansprüche 1 bis 3, wobei der Schritt des Sendens der Steuernachricht an den Zugangspunkt ausgelöst wird, wenn die am Eingang des Netzwerkkerns gelegene Vorrichtung einen Auslastungsgrad des Netzwerkkerns detektiert, der über einem vorbestimmten Schwellenwert liegt.

5. Verwaltungsverfahren nach einem der Ansprüche 1 bis 4, umfassend ferner, wenn bei dem Schritt des Detektierens detektiert wird, dass dem Endgerät eine Backoff-Dauer zugewiesen ist und von diesem Endgerät nicht beachtet worden ist, einen Schritt des Inkrementierens (E90) eines endgerätespezifischen Zählers (CNT(TERM)) für unerlaubte NAS-Anforderungen, wobei die temporäre Kennung dem Endgerät von der am Eingang des Netzwerkkerns gelegenen Vorrichtung zugewiesen wird, wenn die Vorrichtung eine Überschreitung eines vorbestimmten Schwellenwerts durch den endgerätespezifischen Zähler detektiert.

6. Verwaltungsverfahren nach einem der Ansprüche 1 bis 5, wobei die dem Endgerät zugewiesene temporäre Kennung eine weltweit eindeutige temporäre Kennung oder GUTI gemäß der Spezifikation 3GPP TS 23.003, V15.3.0 ist.

7. Verwaltungsverfahren nach einem der Ansprüche 1 bis 6, wobei die Steuernachricht eine OVERLOAD-START-Nachricht gemäß der Spezifikation 3GPP TS 23.401 V15.3.0 oder der Spezifikation 3GPP TS 23.501 V15.1.0 ist, wobei die OVERLOAD-START-Nachricht geändert wird, um eine Blockierung aller oder eines Teils der von einem Endgerät gesendeten Anforderungen, die den mindestens einen Teil der temporären Kennung enthalten, durch den Zugangspunkt anzufordern.

8. Verwaltungsverfahren nach einem der Ansprüche 1 bis 7, umfassend ferner, bei Detektion einer Beendigung des Überlastungszustands des Netzwerkkerns durch die am Eingang des Netzwerkkerns gelegene Vorrichtung, einen Schritt des Sendens (E170) einer Nachricht zur Deaktivierung der Blockierung der Anforderungen an den Zugangspunkt.

9. Verwaltungsverfahren nach Anspruch 8, wobei die Nachricht zur Deaktivierung eine OVERLOAD-STOP-Nachricht gemäß der Spezifikation 3GPP TS 23.401 V15.3.0 oder der Spezifikation 3GPP TS 23.501 V15.1.0 ist.

10. Verwaltungsverfahren nach einem der Ansprüche 1 bis 9, umfassend einen Schritt des Zuweisens einer neuen temporären Kennung an das mindestens eine Endgerät und einen Schritt des Sendens dieser neuen temporären Kennung zum Kommunizieren mit dem Netzwerkkern an das mindestens eine Endgerät.

11. Verwaltungsverfahren nach einem der Ansprüche 1 bis 10, wobei die Steuernachricht eine Blockierung aller von einem Endgerät gesendeten Anforderungen, die den mindestens einen Teil der temporären Kennung enthalten, mit Ausnahme der Anforderungen bezüglich eines Rettungsdienstes, durch den Zugangspunkt anfordern.

12. Computerprogramm (PROG2, PROG3) mit Anweisungen zur Ausführung der Schritte des Verwaltungsverfahrens nach einem der Ansprüche 1 bis 11.

13. Computerlesbares Speichermedium, auf dem ein Computerprogramm nach Anspruch 12 gespeichert ist.

14. Vorrichtung (2), die am Eingang eines ein Mobilfunkzugangsnetz steuernden Netzwerkkerns gelegen ist, geeignet ist, einen Überlastungszustand des Netzwerkkerns zu verwalten, und umfasst:
- ein Empfangsmodul (2A), das geeignet ist, eine Non-Access-Stratum-Anforderung, NAS-Anforderung genannt, von mindestens einem Endgerät zu empfangen, das mit dem Mobilfunkzugangsnetz über einen Zugangspunkt verbunden ist und von der Vorrichtung verwaltet wird;
- Module, die für mindestens ein solches Endgerät durch das Empfangsmodul nach dem Empfangen einer NAS-Anforderung von dem Endgerät aktiviert werden, wobei diese Module umfassen:
o ein Detektionsmodul (2B), das dazu ausgestaltet ist zu detektieren, ob dem Endgerät eine Backoff-Dauer zugewiesen ist; und
o ein Zuordnungsmodul (2C), das aktiviert wird, wenn dem Endgerät keine Backoff-Dauer zugeordnet ist, und das dazu ausgestaltet ist, dem Endgerät eine Backoff-Dauer zuzuordnen und an es zu übertragen, die dazu bestimmt ist, von diesem beim Senden von NAS-Anforderungen an den Netzwerkkern angewandt zu werden;
wobei die Vorrichtung **dadurch gekennzeichnet ist, dass** sie ferner ein Sendemodul (2F) umfasst, das aktiviert wird, wenn das Detektionsmodul detektiert, dass dem Endgerät eine Backoff-Dauer zugeordnet ist und von diesem nicht beachtet worden ist, wobei das Sendemodul dazu ausgestaltet ist, an das Endgerät über den Zugangspunkt eine dem Endgerät zugewiesene temporäre Kennung zum Kommunizieren mit dem Netzwerkkern zu senden und an den Zugangspunkt eine Steuernachricht zu senden, die mindestens einen Teil der temporären Kennung umfasst, wobei diese Steuernachricht eine Blockierung aller oder eines Teils der von einem Endgerät gesendeten Anforderungen, die den mindestens einen Teil der temporären Kennung enthalten, durch den Zugangspunkt anfordert.

15. Kommunikationssystem (1), umfassend:
- eine Vorrichtung (2) nach Anspruch 14, die am Eingang eines ein Mobilfunkzugangsnetz steuernden Netzwerkkerns gelegen ist; und
- mindestens einen Zugangspunkt (3) des Mobilfunkzugangsnetzes, wobei dieser Zugangspunkt umfasst:
o ein Empfangsmodul (3A), das geeignet ist, von der am Eingang des Netzwerkkerns gelegenen Vorrichtung eine Steuernachricht zu empfangen, die mindestens einen Teil mindestens einer temporären Kennung umfasst, die von der Vorrichtung mindestens einem Endgerät zum Kommunizieren mit dem Netzwerkkern zugewiesen wurde, das von dieser Vorrichtung verwaltet wird und eine ihm zugeordnete Backoff-Dauer nicht beachtet hat, wobei der mindestens eine Teil der mindestens einen temporären Kennung von dem mindestens einen Endgerät bei seinen Kommunikationen mit dem Zugangspunkt verwendet wird und es dem Zugangspunkt ermöglicht, von dem Endgerät kommende Anforderungen zu identifizieren, wobei diese Steuernachricht eine Blockierung aller oder eines Teils der von einem Endgerät gesendeten Anforderungen, die den mindestens einen Teil der temporären Kennung enthalten, durch den Zugangspunkt anfordert;
o Module, die beim Empfangen einer von einem Endgerät empfangenen Anforderung aktiviert werden und umfassen:
▪ ein Überprüfungsmodul (3B), das dazu ausgestaltet ist zu überprüfen, ob die empfangene Anforderung den mindestens einen Teil der mindestens einen temporären Kennung, die in der Steuernachricht enthalten ist, umfasst und gemäß der Steuernachricht blockiert werden muss;
▪ ein Blockierungsmodul (3C), das gegebenenfalls aktiviert wird, um die Anforderung am Zugangspunkt zu blockieren; und
▪ ein Übertragungsmodul (3D), das anderenfalls aktiviert wird und dazu ausgestaltet ist, die Anforderung an die am Eingang des Netzwerkkerns gelegene Vorrichtung zu übertragen.

16. Kommunikationssystem (1) nach Anspruch 15, wobei die am Eingang des Netzwerkkerns gelegene Vorrichtung (2) ist:
- ein SGSN (Serving GPRS Support Node), wenn das Mobilfunkzugangsnetz ein Netz der zweiten oder dritten Generation ist; oder
- eine MME (Mobility Management Entity) zur Verwaltung der Mobilität, wenn das Mobilfunkzugangsnetz ein Netz der vierten Generation ist; oder
- eine AMF (Access and Mobility management Function) zur Verwaltung der Mobilität und des Zugangs, wenn das Mobilfunkzugangsnetz ein Netz der fünften Generation ist.

## Claims

1. Method for managing an overload state of a core network (CN) controlling a mobile access network (AN), this management method being intended to be implemented by a device (2) located at the input of the core network, said management method comprising, for at least one terminal (4) connected to the mobile access network via an access point (3) and managed by said device, following the receipt (E20) of a non-access stratum request, referred to as an NAS request, from said terminal:
- a step (E30) of detecting whether a backoff timer is associated with this terminal;
- if no backoff timer is associated with the terminal, a step of associating (E40) with, and of transmitting (E50) to said terminal, a backoff timer intended to be applied by the latter for sending NAS requests to the core network;
said method being **characterized in that** it further comprises, if, during the detection step (E30), it is detected that a backoff timer is associated with the terminal and has not been respected by the latter (E60), a step (E110) of the device located at the input of the core network sending, to the terminal, via the access point, a temporary identifier allocated to the terminal to communicate with the core network, and a step (E140) of the device located at the input of the core network sending, to the access point, a control message comprising at least one part of said temporary identifier, this control message requesting that all or some of the requests transmitted by a terminal which contain said at least one part of said temporary identifier be blocked by the access point.

2. Management method according to Claim 1, further comprising, if, during the detection step, it is detected that a backoff timer is associated with the terminal and has not been respected by this terminal, a step (E90) of incrementing a global counter (CNTG) of NAS requests referred to as illicit which is associated with a set comprising a plurality of terminals referred to as illicit which are managed by the device located at the input of the core network and do not respect the backoff timers which have been allocated to them, the step of sending the control message to the access point being triggered when the device located at the input of the core network detects that the global counter is above a predetermined threshold.

3. Management method according to Claim 2, wherein the control message comprises at least one part of each temporary identifier allocated to communicate with the core network at each terminal in the set of illicit terminals, the control message requesting that all or some of the requests containing said parts of the temporary identifiers allocated to the terminals in the set of illicit terminals be blocked by the access point.

4. Management method according to any one of Claims 1 to 3, wherein the step of sending the control message to the access point is triggered when the device located at the input of the core network detects a load level of the core network above a predetermined threshold.

5. Management method according to any one of Claims 1 to 4, further comprising, if, during the detection step, it is detected that a backoff timer is associated with the terminal and is not respected by this terminal, a step (E90) of incrementing a counter (CNT(TERM)) of illicit NAS requests which is specific to the terminal, the temporary identifier being allocated to the terminal by the device located at the input of the core network when said device detects that the counter which is specific to the terminal has exceeded a predetermined threshold.

6. Management method according to any one of Claims 1 to 5, wherein the temporary identifier allocated to the terminal is a global unique temporary identifier or GUTI conforming to the 3GPP specification TS 23.003, V15.3.0.

7. Management method according to any one of Claims 1 to 6, wherein the control message is an OVERLOAD START message conforming to the 3GPP specification TS 23.401 V15.3.0 or to the 3GPP specification TS 23.501 V15.1.0, said OVERLOAD START message being modified to request that all or some of the requests transmitted by a terminal which contain said at least one part of said temporary identifier be blocked by the access point.

8. Management method according to any one of Claims 1 to 7, further comprising, when the device located at the input of the core network detects a cessation of the overload state of the core network, a step (E170) of sending, to the access point, a message for deactivating the blocking of the requests.

9. Management method according to Claim 8, wherein the deactivation message is an OVERLOAD STOP message conforming to the 3GPP specification TS 23.401 V15.3.0 or the 3GPP specification TS 23.501 V15.1.0.

10. Management method according to any one of Claims 1 to 9, comprising a step of allocating a new temporary identifier to said at least one terminal and a step of sending this new temporary identifier to said at least one terminal to communicate with the core network.

11. Management method according to any one of Claims 1 to 10, wherein the control message requests that all the requests transmitted by a terminal which contain said at least one part of the temporary identifier, with the exception of the requests relating to an emergency service, be blocked by the access point.

12. Computer program (PROG2,PROG3) comprising instructions for executing the steps of the management method according to any one of Claims 1 to 11.

13. Computer-readable storage medium on which a computer program according to Claim 12 is stored.

14. Device (2) located at the input of a core network controlling a mobile access network, which is able to manage an overload state of the core network and comprises:
- a receiving module (2A), which is able to receive a non-access stratum request, referred to as an NAS request, from at least one terminal connected to the mobile access network via an access point and managed by said device;
- modules, activated for at least one said terminal by the receiving module following receipt of an NAS request from said terminal, these modules comprising:
o a detection module (2B) configured to detect whether a backoff timer is associated with said terminal; and
o an association module (2C), activated if no backoff timer is associated with said terminal, and configured to associate with, and to transmit to said terminal, a backoff timer intended to be applied by the latter for sending NAS requests to the core network;
the device being **characterized in that** it further comprises a sending module (2F) activated if the detection module detects that a backoff timer is associated with the terminal and has not been respected by the latter, said sending module being configured to send, to the terminal, via the access point, a temporary identifier allocated to the terminal to communicate with the core network, and to send, to the access point, a control message comprising at least one part of said temporary identifier, this control message requesting that all or some of the requests transmitted by a terminal which contain said at least one part of the temporary identifier be blocked by the access point.

15. Communication system (1), comprising:
- a device (2) according to Claim 14 located at the input of a core network controlling a mobile access network; and
- at least one access point (3) of the mobile access network, this access point comprising:
o a receiving module (3A), which is able to receive, from said device located at the input of the core network, a control message comprising at least one part of at least one temporary identifier allocated by said device to at least one terminal managed by this device to communicate with the core network and which has not respected a backoff timer which was associated with it, said at least one part of said at least one temporary identifier being used by said at least one terminal during its communications with said access point and making it possible for the access point to identify requests originating from said terminal, this control message requesting that all or some of the requests transmitted by a terminal which contain said at least one part of said temporary identifier be blocked by the access point;
o modules, activated when a request received from a terminal is received, and comprising:
▪ a verification module (3B), configured to verify whether the received request comprises said at least one part of said at least one temporary identifier contained in the control message and should be blocked in accordance with the control message;
▪ a blocking module (3C), activated, if necessary, to block the request at the access point; and
▪ a transmission module (3D), activated otherwise, and configured to transmit the request to the device located at the input of the core network.

16. Communication system (1) according to Claim 15, wherein the device (2) located at the input of the core network is:
- an SGSN (serving GPRS support node) equipment when the mobile access network is a second- or third-generation network; or
- a mobility management entity (MME) for managing mobility when the mobile access network is a fourth-generation network; or
- an AMF (access and mobility management function) equipment for managing mobility and access when the mobile access network is a fifth-generation network.
